(19) Europäisches Patentamt
European Patent Office
Office européen des brevets

(11) **EP 1 827 015 A2**

(12) **EUROPEAN PATENT APPLICATION**

(43) Date of publication:
29.08.2007 Bulletin 2007/35

(51) Int Cl.:
*H04N 5/74* (2006.01)    *H04N 9/31* (2006.01)

(21) Application number: 07250798.1

(22) Date of filing: 26.02.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 28.02.2006  JP 2006051484
28.02.2006  JP 2006051485

(71) Applicant: Hitachi, Ltd.
Chiyoda-ku
Tokyo 100-8220 (JP)

(72) Inventors:
• Yatsu, Masahiko
c/o Hitachi, Ltd., Intellectual Property Group
Chiyoda-ku
Tokyo 100-8220 (JP)
• Hirata, Koji
c/o Hitachi, Ltd., Intellectual Property Group
Chiyoda-ku
Tokyo 100-8220 (JP)

(74) Representative: Calderbank, Thomas Roger et al
Mewburn Ellis LLP
York House
23 Kingsway
London WC2B 6HP (GB)

(54) **Projection display**

(57) Uniform light quantity distribution is achieved in an image display element by directing light beam reflected in an A quadrant of X-Y plane coordinate system of a reflector into a B quadrant of the X-Y plane coordinate system of the image displaying element, when the X-Y plane coordinate system is provided in a plane perpendicular to an optical axis of a light emitting part.

## FIG.1B

**Description**

The present invention relates to a projection display for projecting images onto a screen using an image displaying element, for example a projection display such as a liquid crystal projector, a reflective image display projector, a rear projection television, and the present invention relates to beam shape converting technology having a function of converting a circular beam shape into a rectangular beam shape.

In JP-A-9-5881, a projecting apparatus having a free-form reflector for illuminating a rectangular field lens is disclosed.

In JP-A-2004-226814, a projector is disclosed which comprises: an illuminating optical system having a light source for emitting illumination light and illuminance uniformizing means for uniformizing illuminance distribution of the light emitted from the light source; a color separating optical system for separating the illumination light emitted from the illuminating optical system into a plurality of color illumination lights; a plurality of electro-optical modulating apparatuses for respectively modulating the plurality of color illumination lights separated by the color separating optical system; a color combining optical system for combining the modulated lights emitted from each electro-optical modulating apparatus; a projecting optical system for projecting the combined light emitted from the color combining optical system as a displayed image; and a relay optical system which is located in a path of at least one color illumination light among the plurality of color illumination lights separated by the color separating optical system.

In JP-A-8-234156, a projector apparatus is disclosed which comprises: a light source; a cross dichroic mirror into which a light beam emitted by the light source is directed, the cross dichroic mirror separating the light beam into a first primary color light on the one hand and second and third primary color lights on the other hand, with a separation angle of 180° to each other; a first mirror for polarizing the first primary color light from the cross dichroic mirror by 90°; a second mirror for polarizing the first primary color light polarized by the first mirror by another 90° and directing the light through a first image displaying panel into a first incident plane of a color combining prism; a third mirror for polarizing the second and third primary color lights from the cross dichroic mirror by 90°; a dichroic mirror for separating the second and third primary color lights polarized by the third mirror into the second primary color light and the third primary color light and allowing the second primary color light to go straight and polarizing the third primary color light by 90°; a fourth mirror for polarizing the second primary color light from the dichroic mirror by 90° and directing the light through a second image displaying panel into a second incident plane of the color combining prism, the second incident plane being opposite to the first incident plane; and a fifth mirror for polarizing the third primary color light polarized by the dichroic mirror by another 90° and directing the light through a third image displaying panel into a third incident plane of the color combining prism, the third incident plane being perpendicular to the first and second incident planes, wherein the color combining prism combines the primary color lights having passed through the respective image displaying panels and directs the combined light into a projection lens, and optical path lengths from the light source for the respective primary color lights to the corresponding image displaying panels are almost equal to one another.

Hereinafter, problems in these documents will be described.

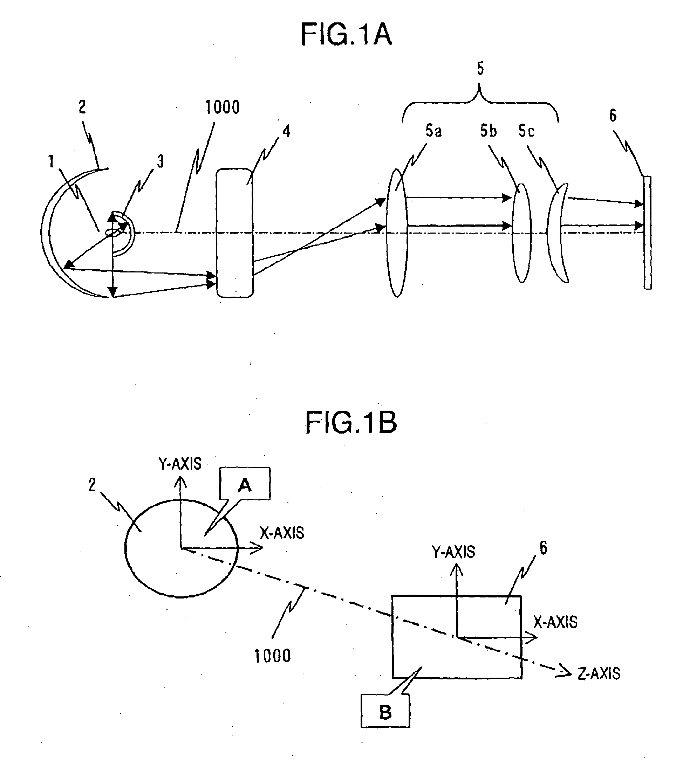

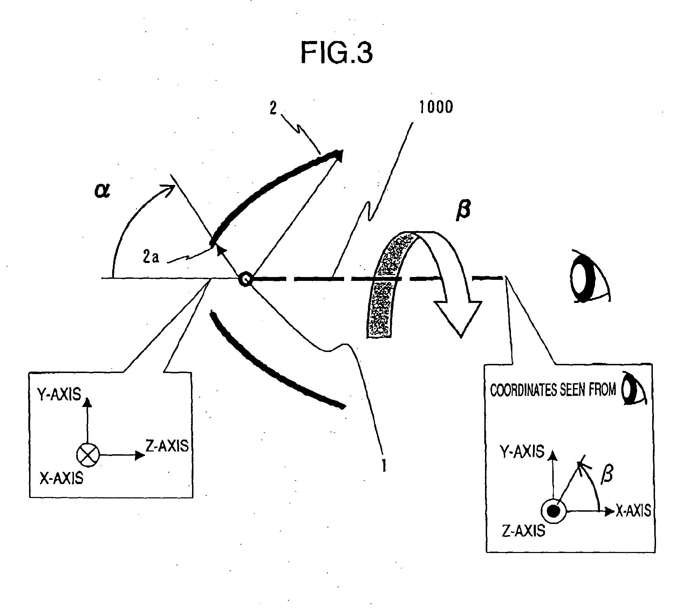

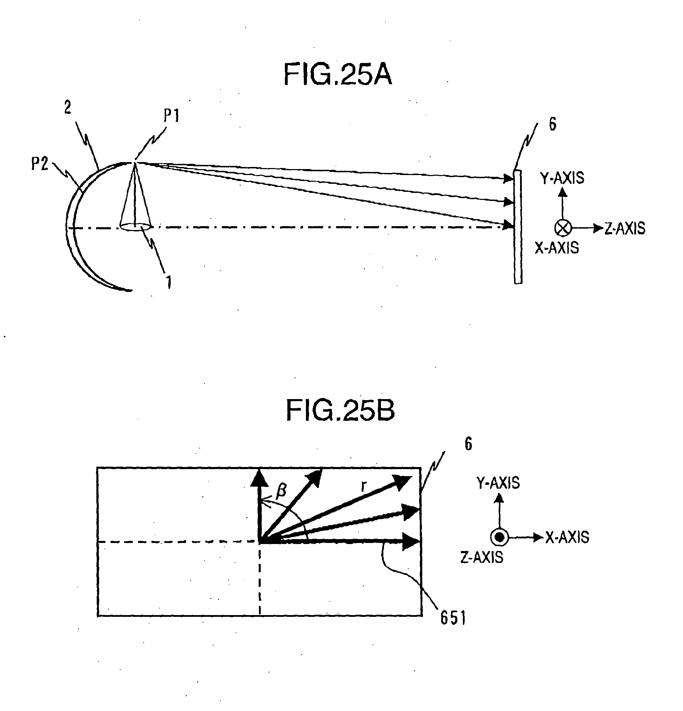

Figs. 25A and 25B are views showing main parts of a reflector illustrated in Figs. 1 and 3 of JP-A-9-5881. Fig. 25A is a view of light rays, illustrating mapping in a radial direction with respect to an optical axis and Fig. 25B is a view of intersection loci, illustrating mapping in a rotational direction wherein the optical axis is a rotating axis.

In Figs. 25A and 25B, because of difference between light emitting positions in a light emitting part 1, light beams reflected at one and the same point (a point P1) on a reflector 2 reach to different light ray positions on an image displaying element 6. By utilizing this divergence, a beam shape converting function is achieved without lens arrays. Length of arrow 651 in Fig. 25B represents the divergence. In addition, the light beams emitted from the light emitting part 1 are rotationally symmetrical with respect to the optical axis (Z axis), which corresponds to a situation where the arrow 651 rotates with an angle β.

However, as apparent from the mapping in Fig. 25B, the length of the arrow 651 which represents the divergence of the light beam irradiating the image display element 6 varies depending on the angle β and therefore it is difficult to obtain uniform light quantity distribution.

Further, the same discussion also applies to a different position (a point P2) on the reflector 2 for the light beam emitted from the light emitting part 1. That is to say, the arrow 651 in the image displaying element 6 in Figs. 25A and 25B is also present in the case of the different point (the point P2) on the reflector 2 and thus it is required to perform design and evaluation also in consideration of the arrows in the discussion of uniform light quantity distribution.

In JP-A-2004-226814, an optical path length to a liquid crystal panel for B light is longer than those for R and G lights. Accordingly, for the B light, an image having the same size as effective dimensions of the panel is first imaged on the way to the liquid crystal panel and then the space image is reversed by a relay system lens and again imaged on the liquid crystal panel. Therefore, on the liquid crystal panel for B light, the image of B light is reverse to R and G lights which are directly imaged with an image having the same size as effective dimensions of respective liquid crystal panel, which disadvantageously results in brightness unevenness and color unevenness on a screen.

Further, in JP-A-2004-226814, in order to make the light quantity distribution on the liquid crystal panel uniform, light from the light source is divided by a first lens array and a plurality of divided light thus obtained are superimposed onto the liquid crystal panel by a second lens array and a superimposing lens. However, high shape accuracy and positioning accuracy of the first lens array and the second lens array are required to superimpose the lights on the liquid crystal panel to expand and project them, which disadvantageously results in cost increase. Further, if polarizing plates are required on an incident side and an exit side of the liquid crystal panel, a problem of cost increase of the illuminating optical unit occurs.

In JP-A-8-234156, the first and second mirrors and the third and fourth mirrors are symmetrically positioned with respect to the cross dichroic mirror and further the fourth mirror and the fifth mirror are symmetrically positioned with respect to the cross dichroic mirror, so that optical distances from the light source to the image displaying panels corresponding to the respective primary color lights become equal to prevent color unevenness in principle. However, because the cross dichroic mirror used for color separation is arranged at a position far from the image displaying panels, sensitivity of change in image position on the image displaying panel to change in the angle of the cross dichroic mirror becomes high, which disadvantageously results in requirement of a holding method with high accuracy. Further, dichroic mirrors which are combined to form X-shape (cross shape) have a predetermined thickness at an intersection of the cross dichroic mirror and thus color separation is not achieved in the cross region, which results in a problem that desired characteristics cannot be obtained. Also in the projector apparatus of JP-A-8-234156, as in JP-A-2004-226814, high shape accuracy and positioning accuracy for the illuminating optical unit such as a lens array are required, which disadvantageously results in cost increase. Moreover, if polarizing plates are required on an incident side and an exit side of the image displaying panel, a problem of cost increase of the illuminating optical unit occurs.

The present invention is provided in view of the above described problems and it is a preferred aim of the present invention to provide an illuminating optical apparatus and a projection display using the illuminating optical apparatus which has the beam shape converting function for converting a circular beam shape into a rectangular beam shape and achieves uniform light quantity distribution in the image displaying element.

Further, it is a preferred aim of the present invention to provide a projection display which does not use cross dichroic mirrors as color separating parts, generates no color unevenness and brightness unevenness in principle, and is easy to manufacture without lens arrays.

In one aspect of the present invention, uniform light quantity distribution in the image displaying element is achieved by passing light reflected by a reflector through rotationally asymmetrical elements which are formed to be defined by a predetermined formula.

In another aspect of the present invention, a polarization converting part is provided for arranging the light having passed through a first lens element in a desired polarization direction, and a first color separating part for separating light from a light source into a first primary color light on the one hand and second and third primary color lights on the other hand and a second color separating part for separating the second primary color light from the third primary color light are provided, and optical distances from the first lens element to image displaying elements disposed for the respective primary color lights are made to be equal, and a polarizing plate is disposed between the polarization converting part and the first color separating part.

Other objects, features and advantages of the invention will become apparent from the following description of the embodiments of the invention taken in conjunction with the accompanying drawings.

IN THE DRAWINGS

Figs. 1A and 1B are views showing an illuminating optical apparatus of the present invention;
Figs. 2A and 2B are views showing an illuminating optical apparatus, illustrating a same-quadrant mapping mode;
Fig. 3 is an illustrative view of orientation distribution of a light emitting part;
Fig. 4 is an illustrative view of a combination in the mapping modes;
Fig. 5 is an illustrative view of a free-form surface;
Figs. 6A and 6B are illustrative views of a mapping mode, not taking continuity into consideration;
Figs. 7A and 7B are illustrative views of a mapping mode, taking continuity into consideration;
Figs. 8A and 8B are illustrative views of a mapping mode, taking continuity and uniformity into consideration;
Figs. 9A and 9B are illustrative views of a mapping mode in a radial direction;
Figs. 10A and 10B are views showing a first embodiment;
Figs. 11A and 11B are views showing lens data of the first embodiment;
Figs. 12A, 12B and 12C are views showing mappings of light ray tracing;
Figs. 13A, 13B and 13C are views showing raster performance in an image displaying element of the first embodiment;
Figs. 14A and 14B are cross sectional views of a rotationally asymmetrical optical element of the first embodiment;
Figs. 15A, 15B and 15C are views showing mappings of light ray tracing on the image displaying element depending on difference between positions of a light emitting part of the first embodiment.

Figs. 16A and 16B are views showing light ray tracing of light beam divergence depending on the size of the light emitting part of the first embodiment;

Figs. 17A and 17B are views showing a second embodiment;

Figs. 18A and 18B are views showing lens data of the second embodiment;

Figs. 19A, 19B and 19C are views showing mappings of light ray tracing of the second embodiment;

Figs. 20A, 208 and 20C are views showing raster performance in an image displaying element of the second embodiment;

Figs. 21A and 21B are views showing a third embodiment;

Figs. 22A and 22B are views showing lens data of the third embodiment;

Figs. 23A, 23B and 23C are views showing mappings of light ray tracing of the third embodiment;

Figs. 24A, 24B and 24C are views showing raster performance in an image displaying element of the third embodiment;

Figs. 25A and 25B are illustrative views of the beam shape converting function in JP-A-9-5881;

Fig. 26 is a schematic view showing illuminating optical system of a projection display of a fourth embodiment;

Fig. 27 is an arrangement view showing illuminating optical system of a projection display of a fifth embodiment;

Fig. 28 is an arrangement view showing illuminating optical system of a projection display of a sixth embodiment;

Fig. 29 is an arrangement view showing illuminating optical system of a projection display of a seventh embodiment;

Fig. 30 is a front view showing a rear projection display of an eighth embodiment;

Fig. 31 is a side view showing the rear projection display of the eighth embodiment;

Fig. 32 is an illustrative view of illuminating optical system of the projection display of the fourth embodiment;

Fig. 33 is a perspective view of the illuminating optical system of the projection display of the fourth embodiment;

Figs. 34A and 34B are views showing free-form surface shapes of a reflector and a first lens element of the fourth embodiment;

Figs. 35A, 35B and 35C are views showing results of light ray tracing on the image displaying element with the illuminating optical system of the fourth embodiment;

Figs. 36A, 36B and 36C are views showing light quantity distribution obtained on the image displaying element with the illuminating optical system of the fourth embodiment, the light quantity distribution being determined from light ray tracing; and

Figs. 37A and 37B are views showing lens data of the illuminating optical system of the fourth embodiment.

Hereinafter, the best embodiments will be described with reference to the drawings. In the drawings, elements having the same function are denoted by the same reference characters and description of elements which have been once described will be omitted.

Referring to Figs. 1 to 5, an illuminating optical apparatus having a beam shape converting function will be described.

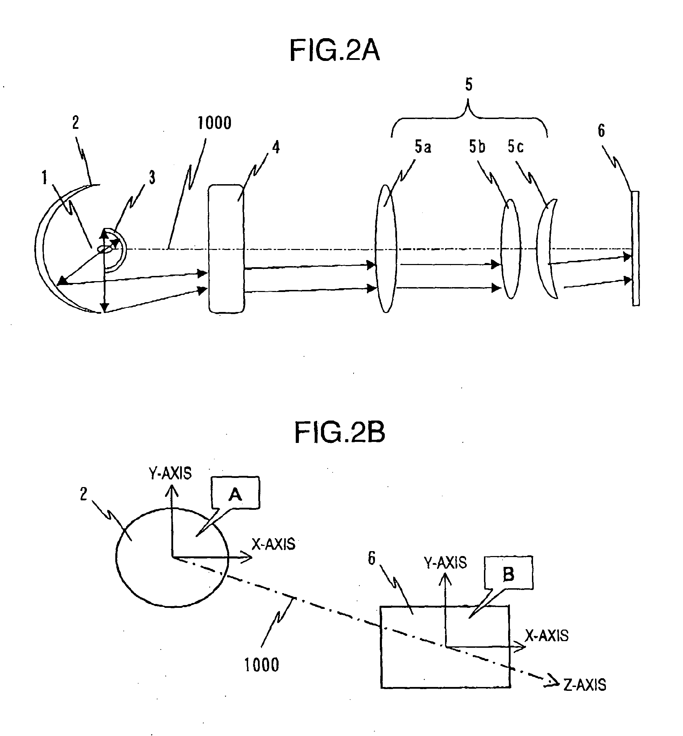

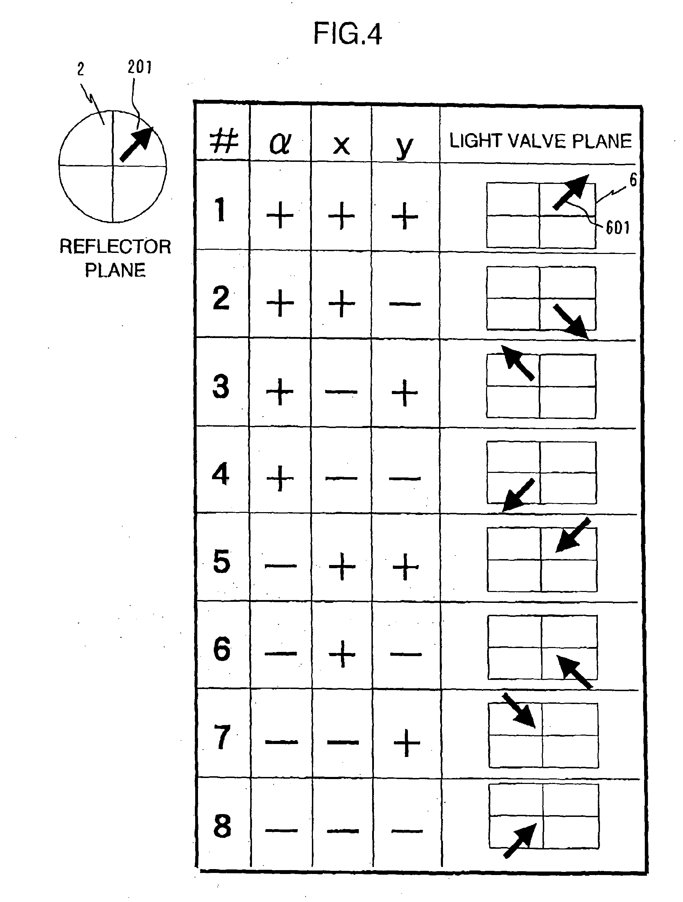

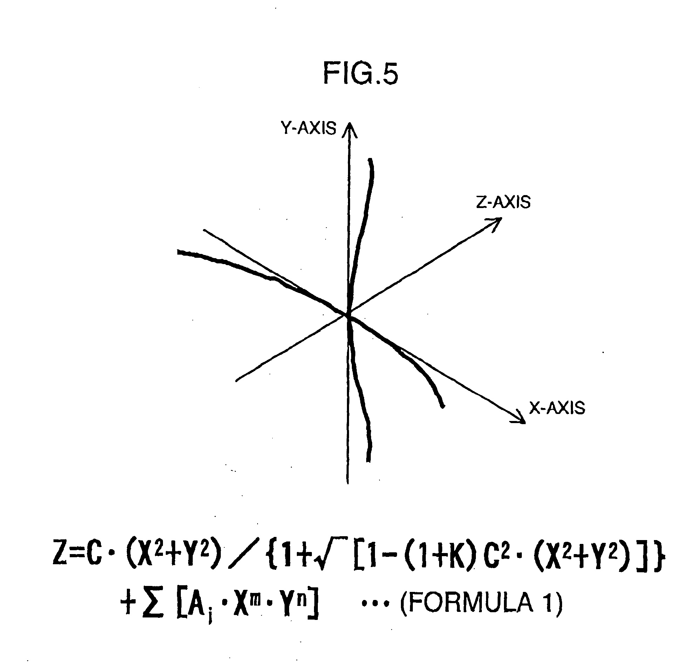

Figs. 1A and 1B are views showing an illuminating optical apparatus, Figs. 2A and 2B are views showing an illuminating optical apparatus, illustrating a same-quadrant mapping mode, Fig. 3 is an illustrative view of orientation distribution of a light emitting part for angle definition in the mapping mode, Fig. 4 is a view illustrating comparison of mapping modes, and Fig. 5 is an illustrative view of a free-form surface.

First of all, the free-form surface shape according to the present invention will be described with reference to Fig. 5.

The free-form surface shape specifically used in the present invention is expressed by Formula 1 described in the lower part of Fig. 5, where an optical axis is Z axis of rectangular coordinates and a vertex is an origin point of the coordinates as shown in the upper part of Fig. 5.

[Formula 1]

$$Z = C \cdot (X^2 + Y^2) \diagup \{1 + \sqrt{[1 \cdot (1+K)C^2 \cdot (X^2+Y^2)]}\} + \Sigma [A_i \cdot X^m \cdot Y^n]$$

where C is a curvature, K is a conic constant and $A_i$ is a constant. In Formula 1, the first term except for $\Sigma$ term represents a conic surface, which is the same as a conic surface in a formula for a general rotationally symmetrical aspheric surface. The $\Sigma$ term is a polynomial term for X axis and Y axis. For example, $A_i \cdot X^m \cdot Y^n$ means that a factor of a term having an order of $X^m$-$Y^n$ is $A_i$, where m and n are natural numbers (except for the case that m and n are simultaneously 0). In other words, this formula represents a shape of a rotationally symmetrical conic surface with a rotationally asymmetrical polynomial for X and Y. Here, K is a conic constant and C is a curvature. The curvature C is the reciprocal of radius of curvature R.

Then, the drawings will be described sequentially, starting from Figs. 1A and 1B.

First, an illuminating optical apparatus according to the present invention will be described with reference to Figs. 1A and 1B.

Fig. 1A is a cross sectional view of the illuminating optical apparatus according to the present invention including an optical axis and Fig. 1B is a perspective view showing correspondence between an incident point of a light beam traveling from a light emitting part into a reflector (i.e. an exit point on the reflector) and an incident point on an image displaying element.

As shown in Fig. 1A, the illuminating optical apparatus according to the present invention comprises an image displaying element 6 which is a light valve, a light emitting part 1 which may be a discharge lamp, a reflector for reflecting light from the light emitting part 1, a free-form surface lens 4 for converting a cross sectional shape of light beam into a rectangular shape in cooperation with the reflector, a lens 5 for guiding and irradiating the rectangular light beam, whose shape has been converted by the reflector and the free-form surface lens 4, onto the image displaying element 6. In this case, the reflector consists of an auxiliary reflector 3 provided in front of the light emitting part 1 and a main reflector 2 provided behind the light emitting part 1. The lens 5 consists of a first lens 5a, a second lens 5b and a third lens 5c.

Before the detailed description for Figs. 1A and 1B, rectangular coordinate system is introduced for convenience of description. As shown in Fig. 1B, it is defined that an optical axis 1000 is Z axis and X axis and Y axis are determined in a plane perpendicular to Z axis. For convenience, a direction parallel to long sides of the image displaying element 6 having a rectangular shape is defined as X axis direction and a direction parallel to short sides is defined as Y axis direction. X-Y plane formed by X axis and Y axis is represented as a plane seen from a positive side of Z axis to a negative side. Further, the concept of quadrant is introduced. X-Y plane is divided into four regions by X axis and Y axis: a region enclosed by positive X axis and positive Y axis is a first quadrant, a region symmetrical to the first quadrant with respect to positive Y axis is a second quadrant (a region enclosed by negative X axis and positive Y axis), a region symmetrical to the first quadrant with respect to positive X axis is a fourth quadrant (a region enclosed by positive X axis and negative Y axis) and a region symmetrical to the first quadrant with respect to the origin point is a third quadrant (a region enclosed by negative X axis and negative Y axis). This is equivalent to the mathematical quadrant. A direction parallel to X axis in the image displaying element is also referred to as a horizontal direction and a direction parallel to Y axis is also referred to as a vertical direction.

A part of the light beam emitted from the light emitting part 1 is reflected by the reflector 2. Another part of the light beam emitted from the light emitting part 1 is reflected by the auxiliary reflector 3 having a part of a spherical shape and returned back to the original light emitting point and then reflected by the reflector 2. Therefore, when considering the light emitting part 1, the reflector 2, and the auxiliary reflector 3 as a unit, it is necessary to consider only an optical path of the light beam emitted from the light emitting part 1 which is reflected by the reflector 2. The auxiliary reflector 3 is not necessarily provided and the reflector 2 may also directly reflect the light beam in the range of the orientation distribution of the auxiliary reflector 3.

The reflector 2 is a free-form surface reflector having a rotationally asymmetrical free-form surface shape and has rotationally asymmetrical reflection action to the light beam. After the light beam is reflected and subjected to the rotationally asymmetrical reflection action by the reflector 2, the light beam is further subjected to rotationally asymmetrical refraction action by the free-form surface lens 4 having a rotationally asymmetrical free-form surface shape. As a result, a circular light beam is converted into a rectangular light beam (the detail thereof will be described later). The light beam having a rectangular beam shape emitted from the free-form surface lens 4 intersects the optical axis 1000 and is subjected to refraction action by the rotationally symmetrical first, second, and third lenses 5a, 5b, 5c and then irradiated onto the image displaying element 6.

The expression "intersects the optical axis" used here means that the light beam, which is reflected by the reflector 2 and travels into the free-form surface lens 4 and is subjected to refraction action by the free-form surface lens 4 to direct toward the first lens 5a, goes across the optical axis into a region on an opposite side with respect to the optical axis when the light beam is projected onto a plane formed by the optical axis 1000 and an intersection of the light beam emitted from the light emitting part 1 and the reflector 2.

In other words, this is a mapping mode in which, among the light beam emitted from the light emitting part 1, the light beam reflected at a point A on the reflector 2 (a point in the first quadrant of X-Y plane in the coordinates shown in Fig. 1B) reaches a point B on the image displaying element 6 (in the third quadrant of X-Y plane in the coordinates shown in the Fig. 1B) which is in a point-symmetrical direction with respect to the optical axis 1000, for example. It is desirable that the reflector 2 has a rotationally asymmetrical free-form surface shape. However, the present invention is not limited to this and if the reflector 2 is formed to have a rotationally symmetrical free-form surface shape, the free-form surface lens 4 may be formed of a plurality of lenses so as to compensate the rotationally asymmetrical amount which is to be provided to the reflector 2.

Figs. 2A and 2B show a case in which a mapping mode of a light beam used in JP-A-9-5881 described above in Fig. 25 is applied to an illuminating optical apparatus configured in the same manner as in Fig. 1. A large difference is that both a point A and a point B are in the first quadrant of X-Y plane in the coordinates in Fig. 2B. The difference for action will be described later.

Fig. 3 is a view for illustrating parameters (angles $\alpha$, $\beta$) which describe the orientation distribution of the light emitting part 1 in the condition where the light emitting part 1 is placed on the optical axis. Because the light emitting part 1 is generally positioned so that its longitudinal direction is aligned to a direction of the optical axis on the side of the reflector 2, the emitted light beam is present only in a certain range in respect of the angle $\alpha$ from the optical axis 1000 in Fig. 3. For example, the range may be a range from 45° to 135°, which results from shadow of an electrode in the light emitting part 1 or the like. In respect of the angle $\beta$ from positive X axis in X-Y plane where the optical axis 1000 in Fig. 3 is a rotational center, the emitted light beam is present in full 360° direction. The angle $\beta$ corresponds to X axis-Y axis in Fig. 1 and thus a total of eight mapping modes are conceivable: in addition to two for the angel $\beta$, two in the direction of the angle $\alpha$, two in the direction of X axis, and two in the direction of Y axis.

Fig. 4 is an illustrative view of comparison of the mapping modes.

In Fig. 4, an arrow 201 represents an intersection locus (an intersection locus going away from the optical axis) of the light beam on the reflector 2, which is projected onto X-Y plane, in the case where the angle $\beta$ is constant and the angle $\alpha$ is changed to increase its absolute value. Hereinafter, the X-Y plane is referred to as "reflector plane" for convenience of description. An arrow 601 on the image displaying element 6, which is a light valve, is an intersection locus corresponding to the above described arrow 201. Thus, Fig. 4 shows correspondence (i.e. mapping) of the arrow 201 on the reflector plane and the arrow 601 on the image displaying element plane (light valve plane).

For example, in the case of #1 in Fig. 4, the signs of the coordinates of the intersection on the reflector 2 are the same as the signs of the coordinates of the intersection on the image displaying element 6 and a point near the optical axis on the reflector 2 is mapped to a point near the optical axis on the image displaying element 6, which corresponds to the conventional mapping mode described also in Figs. 2A and 2B,

On the other hand, in the case of #4, the signs of the coordinates of the intersection on the reflector 2 are different from the signs of the coordinates of the intersection on the image displaying element 6 and a point near the optical axis on the reflector 2 is mapped to a point near the optical axis on the image displaying element 6, which corresponds to the mapping mode according to the present invention described in Figs. 1A and 1B. From the result of comparing the eight mapping modes, it was found that the mapping mode #4 has the best mapping performance.

The reason thereof includes relation between light beam refraction action and a beam shape converting function. Inherently, an angle of refraction of light beam is a product of light beam height of light beam to be refracted and power (refractive force) of the refracting surface. Therefore, when the light beam is near the optical axis, the refraction action becomes small. However, in the beam shape converting function, rotationally asymmetrical reflection/refraction action is required which is different for X axis direction and Y axis direction. Accordingly, if the signs of the coordinates of the intersection on the reflector 2 are different from the signs of the coordinates of the intersection on the image displaying element 6, that is, if the light beam goes into the opposite side with respect to the optical axis, it is possible to enlarge the unevenness of the height of the light beam, which is considered to be suitable to rotationally asymmetrical control.

In a normal optical system in which light beam is rotationally symmetrical with respect to the optical axis, the light beam near the optical axis has inherently small aberration and the optical performance can be improved by aberration correction of light beam having large light beam height. However, a purpose of the beam shape converting function of the present invention is to actively control (shift) the position of the light beam instead of a simple matter of aberration correction, and therefore the rotationally asymmetrical reflective/refractive action which is different for X axis direction and Y axis direction is indispensable.

Further, this mapping mode has an improved effect against the fact that the light emitting part 1 is not a point light emitting part, but has a finite size, and the effect will be described later in the description of specific embodiments.

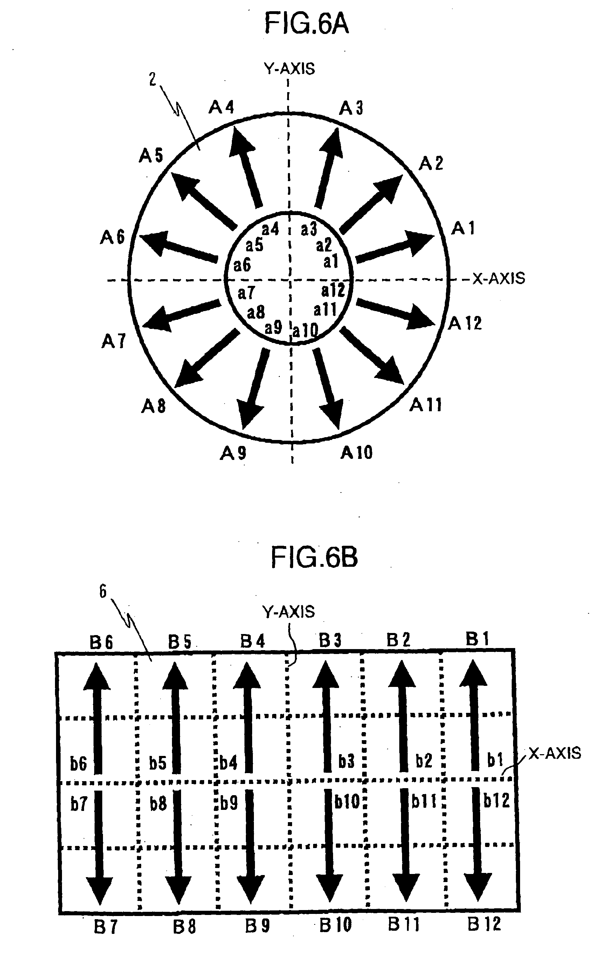

Next, details of the mapping mode for achieving uniform light quantity distribution according to the present invention will be described with reference to Figs. 6A to 9B.

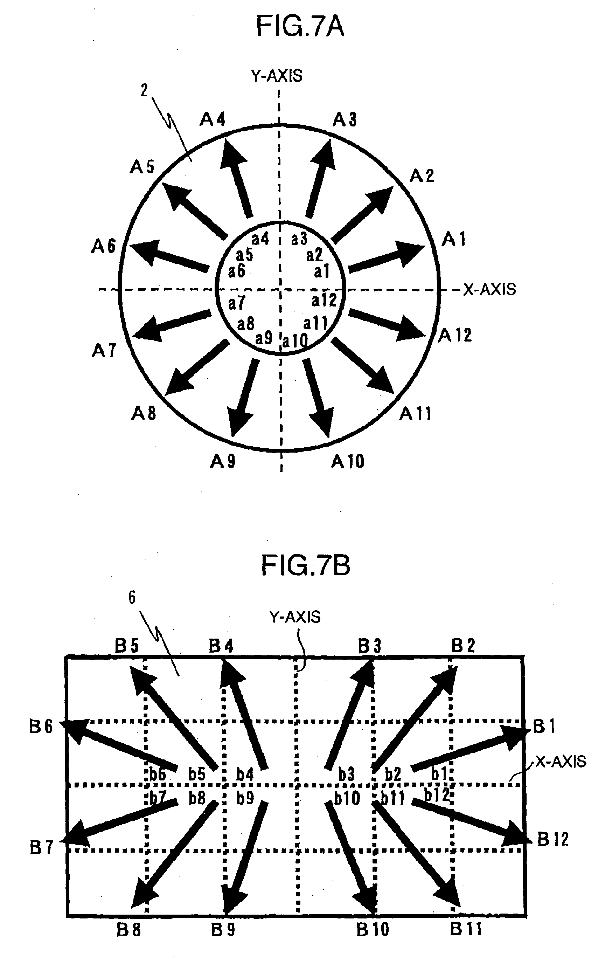

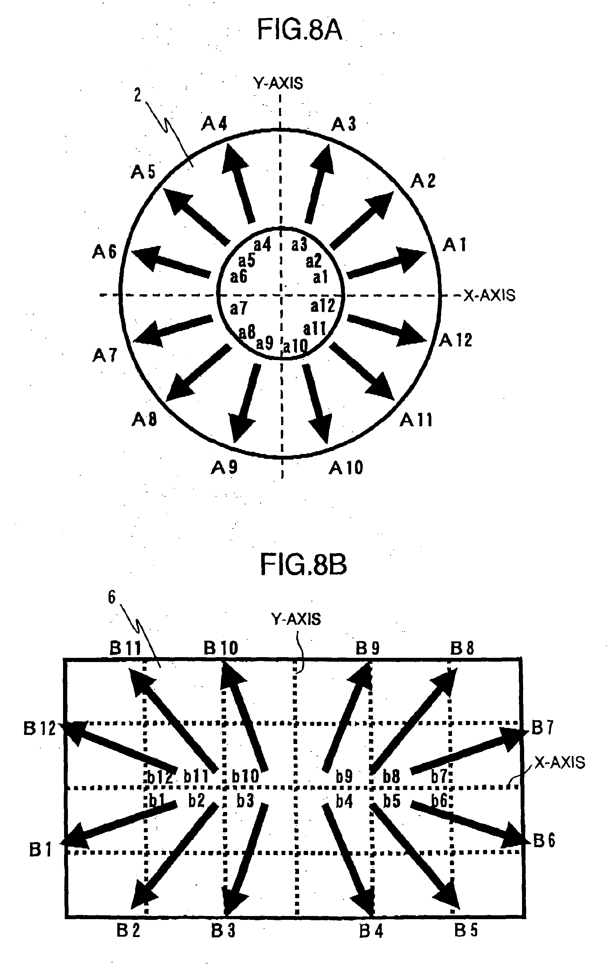

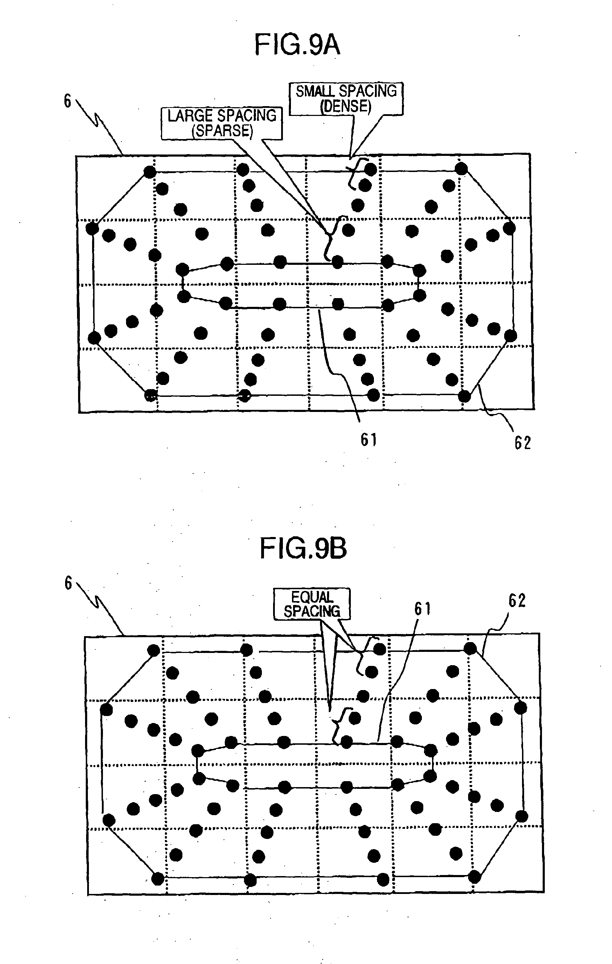

Figs. 6A and 6B are illustrative views of a mapping mode, not taking continuity into consideration, Figs. 7A and 7B are illustrative views of a mapping mode, taking continuity into consideration, Figs. 8A and 8b are illustrative views of a mapping mode, taking continuity and uniformity into consideration and Figs. 9A and 9B are illustrative views of a mapping mode in a radial direction. In Figs. 6A, 6B, 7A and 7B, in order to clearly contrast the present invention with the prior art, it is assumed in the description that light beam reflected in the first quadrant on the reflector 2 travels into the first quadrant on the image displaying element 6.

Fig. 6A illustrates intersection loci on the reflector plane with arrows and Fig. 6B illustrates intersection loci onto the image displaying element plane (light valve plane) of the light beam corresponding to the above described intersection loci on the reflector plane, with arrows.

In the reflector plane, a plurality of intersection loci is conceivable for the angle $\beta$ as a parameter, as shown in Fig. 6A. An arbitrary intersection locus among them is represented by an arrow "ai → Ai", using an end point ai on the side of the optical axis (the inner side) and an end point Ai on the side far from the optical axis (the outer side).

Similarly, in the light valve plane, as shown in Fig. 68, a point (an inner point) corresponding to the end point ai on the inner side in the reflector plane and being on the side of X axis passing through an intersection with the optical axis is denoted by reference character bi and a point corresponding to the end point Ai on the outer side in the reflector plane and being on the periphery side (the outer side) is denoted by reference character Bi. An intersection locus corresponding to the arrow "ai → Ai" is represented by an arrow "bi → Bi".

As apparent from Fig. 6A, an arrow "a1 → A1" and an arrow "a2 → A2" have the same light quantity. Therefore, even arrangement of the corresponding arrows "b1 → B1" and "b2 → B2" with the same length is the sufficient condition for uniform light quantity distribution.

The point a1 and the point a2 in the reflector 2 are adjacent to each other and thus it is required that the corresponding points b1 and b2 in the image displaying element 6 are also adjacent to each other in order to avoid use of a discontinuous surface which is difficult to manufacture. Adjacent positioning of the point b6 and the point b7 and adjacent positioning of the point b12 and the point b1 are possible for the inner point array, while adjacent positioning of the point B6 and the point B7 and adjacent positioning of the point B12 and the point B1 are impossible for the outer point array.

Although the above described mapping in Fig. 25B is sufficient if not considering uniform light quantity distribution and considering only continuity, the present invention will be described here which achieves both the beam shape converting function in the present invention and uniform light quantity distribution.

Figs. 7A and 7B are illustrative views of a mapping mode in which continuity according to the present invention is considered for satisfying the condition of adjacent positioning. In Figs. 7A and 7B, the point B6 and the point 87, and the point B12 and the point B1, which are in the outer point array, are adjacently positioned. In addition, by shifting an inner point array in the image displaying element 6 from the optical axis center of the image displaying element 6, it is possible to make the lengths of the arrows almost equal in order to achieve uniform light quantity distribution. In the above described conventional example in Figs. 25A and 25B, the inner points in the image displaying element 6 gather to the center position of the image displaying element 6 and a rectangular beam shape can be achieved, but the center part is bright and uniform light quantity distribution cannot be obtained.

The description for Figs. 7A and 7B has focused on continuity in comparison to the conventional example, but, in the image displaying element 6 in the mapping mode of the present invention, the signs of X-Y coordinates in the reflector 2 are different from the signs of X-Y coordinates and thus the point b1 in Fig. 7B is substituted by the point b7 and the point B1 is substituted by the point B7, as shown in Figs. 8A and 8B.

Although continuity and light quantity (arrow length) have been described, it is also required to control distribution in a radial direction in order to achieve uniform light quantity distribution.

Figs. 9A and 98 are illustrative views showing intersection loci of light beam on the image displaying element 6 according to the present invention.

As apparent from Figs. 8A and 8B, when the intersection loci on the light valve plane are determined with the angle $\alpha$ being fixed and the angle $\beta$ being varied, a plurality of elliptic intersection loci can be obtained with the angle $\alpha$ as a parameter, as shown in Figs. 9A and 9B. Among them, the innermost ellipse is denoted by reference numeral 61 and the outermost ellipse is denoted by reference numeral 62.

Fig. 9A shows a point array distribution in a radial direction according to the present invention. As apparent from Fig. 9A, it is made in the present invention that in the radial direction, i.e. when the angle $\alpha$ is varied (swung) while the angle $\beta$ is fixed, the loci of the point arrays on the image displaying element 6 become sparse on the inner side of the image displaying element 6 and dense on the outer side.

Fig. 9B shows a point array distribution in the radial direction for comparison with the present invention. This point array distribution is made so that, in the radial direction, i.e. when the angle $\alpha$ is varied (swung) while the angle $\beta$ is fixed, the point array loci on the image displaying element 6 become equally-spaced loci.

The reason of employing the point array distribution in Fig. 9A can be understood by considering the inner ellipse 61 and the outer ellipse 62 in Figs. 9A and 9B described above.

In the case where the inner ellipse 61 and the outer ellipse 62 have the same light quantity because of the orientation distribution of the light emitting part 1, the outer ellipse 62 becomes larger than the inner ellipse 61 and the light quantity per unit area on the outer side is smaller than that on the inner side in the equally-spaced arrangement in Fig. 9B. Thus, by arranging the ellipses, which lie sequentially from the inner side to the outer side, sparsely on the inner side and densely on the outer side as shown in Fig. 9A, uniform light quantity distribution also in consideration of the radial direction can be achieved.

Then, specific embodiments will be described.

(First Embodiment)

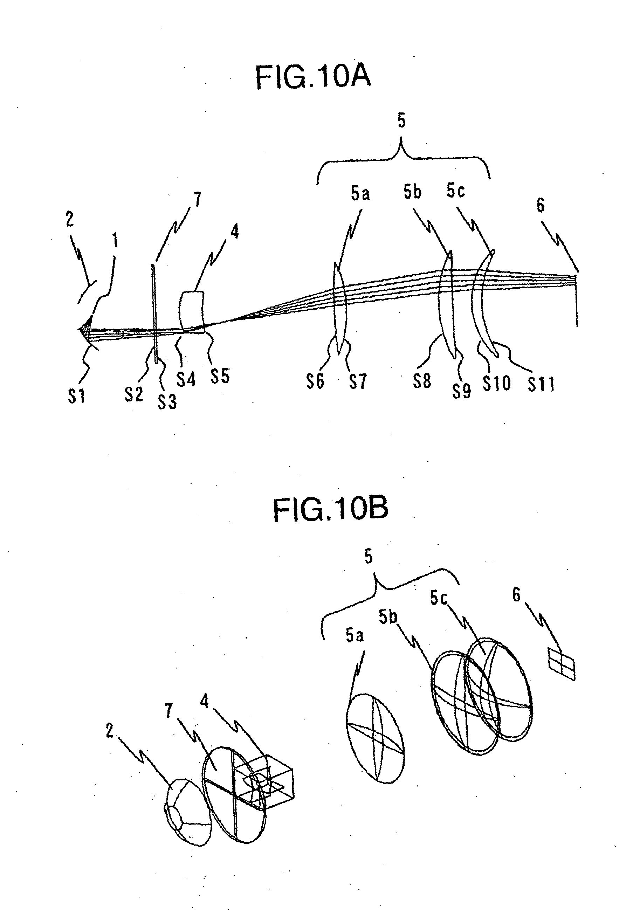

A first embodiment will be specifically described with reference to Figs. 10A to 16B.

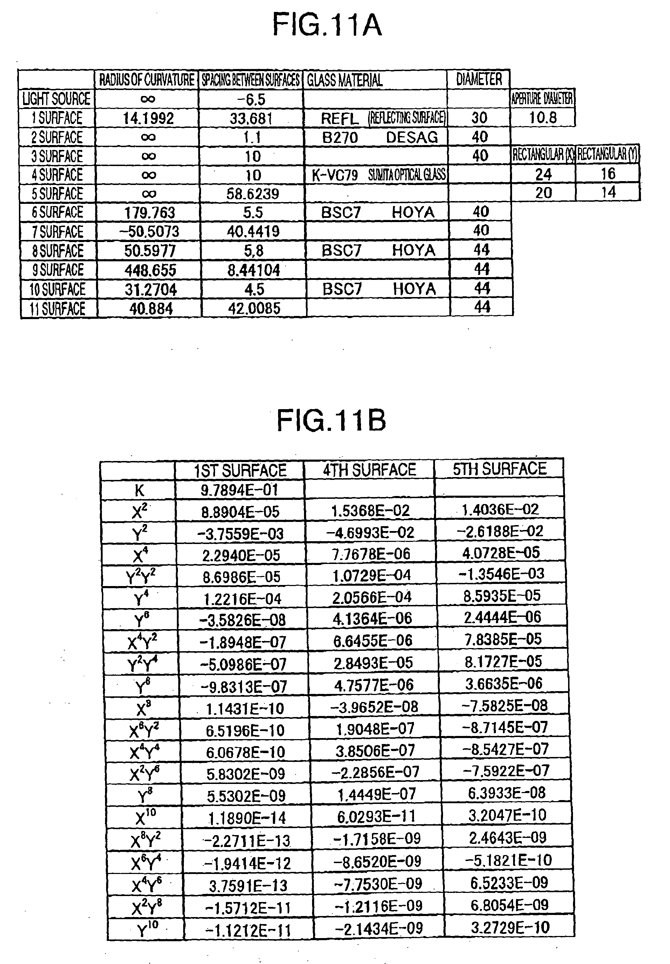

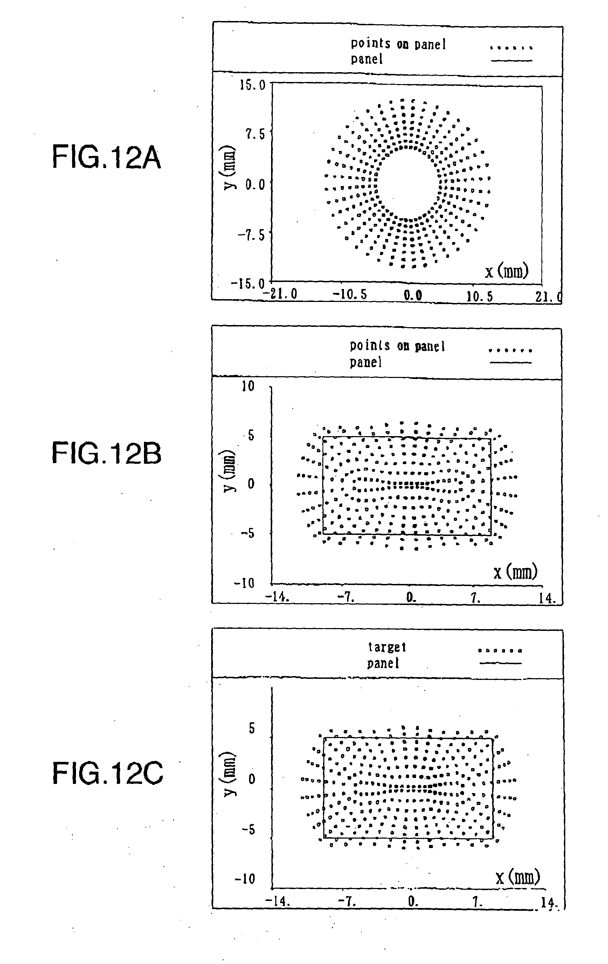

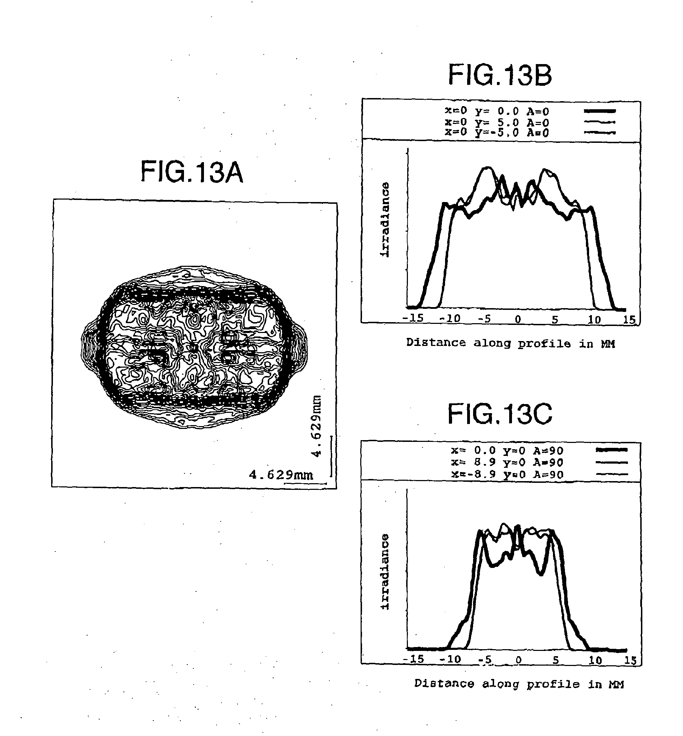

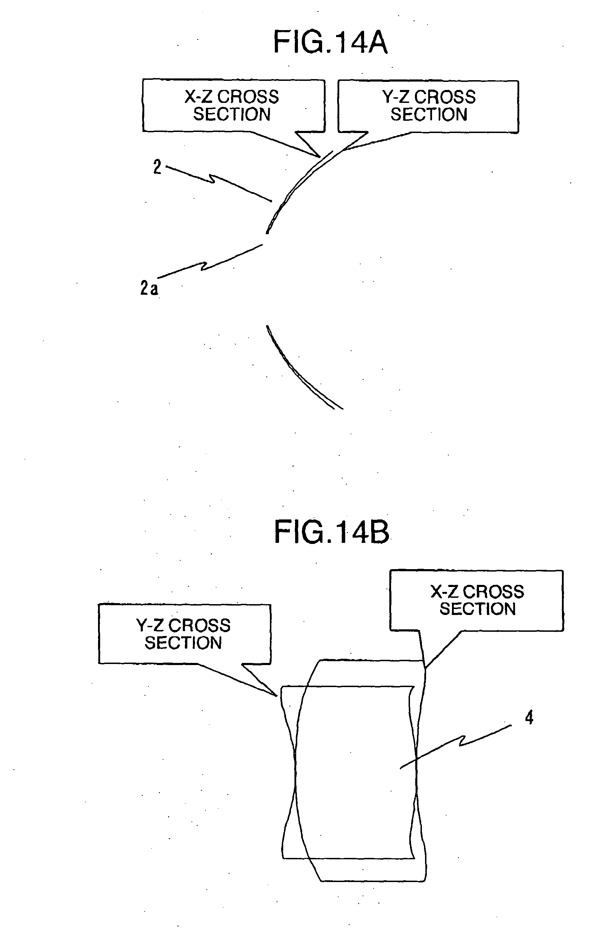

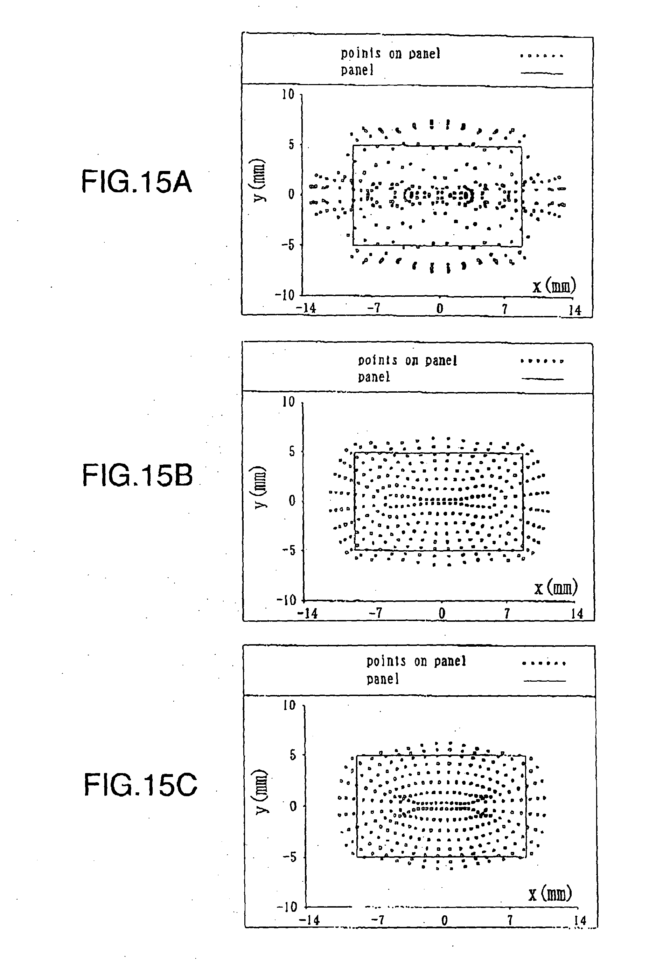

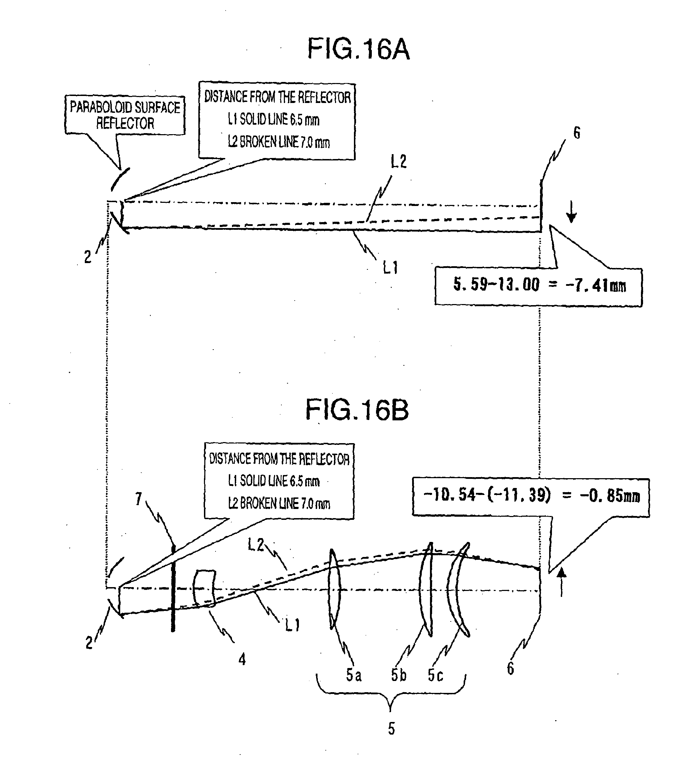

Figs. 10A and 10B are views showing lenses in the first embodiment, Figs. 11A and 11B are views showing lens data of the first embodiment, Figs. 12A, 12B and 12C are views showing a mapping of the first embodiment, Figs. 13A, 13B and 13C are views showing raster performance on an image displaying element of the first embodiment, Figs. 14A and 14B are cross sectional views of a rotationally asymmetrical optical element (lens) of the first embodiment, Figs. 15A, 15B and 15C are views showing mappings of light beam tracing on the image displaying element depending on difference in position of the light emitting part of the first embodiment and Figs. 16A and 16B are views showing light beam tracing of light beam divergence depending on size of the light emitting part of the first embodiment.

Figs. 10A and 108 are different from Figs. 1A and 1B which are schematic views in that the auxiliary reflector 3 is not shown and a protective glass 7 is disposed against burst of a tube which is a light emitting part. However, the basic function is the same as in Figs. 1A and 1B and the description thereof is omitted. The light emitting part 1 has an arc length of 1 mm and also has a certain diameter. Additionally, factors in Figs. 11A and 11B are factors of the free-form surface shape described in Fig. 5.

The mapping shown in Figs. 12A, 12B and 12C relates to light beam emitted from the center position of the light emitting part 1. Fig. 12A shows X-Y coordinates of intersections of the light beam on the reflector 2 having a free-form surface shape, Fig. 12B shows X-Y coordinates of intersections of the light beam on the image displaying element 6 and Fig. 12C shows target X-Y coordinates of the light beam on the image displaying element 6.

As shown in Fig. 12A, in the first embodiment, the angle $\alpha$ described in Fig. 3 is divided into 8 parts in a range of 45° to 90° and the angle $\beta$ is divided into 40 parts in a range of 0° to 360° (based on symmetry, the angle $\beta$ is divided into 10 parts in a range of 0° to 90°) and therefore light beams at a total of 320 points (based on symmetry, 80 times 4) are shown. As can be clearly seen from Fig. 12B, the same intersection coordinates are achieved as the target coordinates determined by the method described in Figs. 6A to 9B.

Accordingly, it is found that the illuminating optical apparatus according to the first embodiment converts a circular light beam into a rectangular light beam and favorably irradiates the image displaying element 6 with a rectangular beam shape. As a result, use efficiency of light is improved.

Figs. 13A, 13B and 13C show raster performance of irradiated light quantity in the image displaying element 6. Fig. 13A is a contour representation and Fig. 13B is a view showing light quantity distributions in a horizontal direction (a direction parallel to X axis) at upper end, center, lower end of the image displaying element 6, and Fig. 13C is a view showing light quantity distributions in a vertical direction (a direction parallel to Y axis) at left end, center, right end of the image displaying element 6. As can be clearly seen from Figs. 13A, 13B and 13C, uniform light quantity distribution is achieved although multi-lens arrays as integrators is not used.

Figs. 14A and 14B show Y-Z cross sections and X-Z cross sections of the reflector 2 which have a rotationally asymmetrical free-form surface shape and the free-form surface lens 4, and it is found from Figs. 14A and 14B that they are rotationally asymmetrical free-form surface shape different for Y-Z cross section and X-Z cross section. While the shapes in Y-Z cross section and X-Z cross section of the free-form surface lens 4 are significantly different, the shapes in Y-Z cross section and in X-Z cross section of the reflector 2 are only slightly different. However, even though difference between the shapes of the reflector 2, i.e. difference between gradients of the reflecting surface is small, position difference in X-Y coordinates is larger at remote positions.

Since the mapping of the first embodiment in Figs. 12A, 12B and 12C used in the above description is a mapping for the light beam emitted from the light emitting part position shown in Figs. 10A and 10B (the center position of the light emitting part 1), Figs. 15A, 15B and 15C show mappings on the image displaying element 6 for different emitting positions of the light beam. In the first embodiment, calculating evaluation of raster performance is carried out by using a light emitting part model having an arc length of 1 mm and also having a certain diameter as the light emitting part 1, and the comprehensive calculating evaluation including difference of the light emitting positions is shown in Figs. 15A, 15H and 15C. That is, three points are used as light emitting positions: an end of the light emitting part 1 on the side of the reflector, a center of the light emitting part 1, and an end of the light emitting part 1 far from the reflector.

Fig. 15B shows a mapping in the case of using the center position of the light emitting part 1 as the light emitting position and this figure is the same as Fig. 12B described above. Fig. 15A shows a mapping in the case of using the end of the light emitting part 1 on the side of the reflector as the light emitting position and Fig. 15C shows a mapping in the case of using the other end of the light emitting part 1 as the light emitting position. As seen from the drawings, the mapping view for the end far from the reflector 2 (Fig. 15C) is equivalent to the mapping view for the design center position (Fig. 15B). On the other hand, the mapping view for the end on the side of the reflector 2 (Fig. 15A) appears different from the mapping view for the design center position, but it can be confirmed that this mapping covers the image displaying element 6.

That is, even though the light emitting part 1 has a finite size, the illuminating optical apparatus according to the first embodiment has beam shape converting function for converting a circular light beam into a rectangular light beam and also achieves uniform light quantity distribution on the image displaying element.

Now, referring to Figs. 16A and 16B, difference between the conventional mapping mode and the mapping mode according to the present invention because of difference of correspondence between X-Y coordinates on the reflector 2 and X-Y coordinates on the image displaying element 6 will be described based on a result of actual light beam tracing.

Fig. 16A corresponds to the conventional example in Fig. 25A, in which a reflector 2 is a paraboloid surface reflector and a light emitting part 1 (the light emitting center position: distance of 6.5 mm) and an image displaying element 6 (distance of 220.096 mm) are placed at the same distance from the reflector 2 as that in first embodiment. In Fig. 16A, a light beam (solid line) emitted from the light emitting center position in a direction perpendicular to the optical axis reaches a position of 13.00 mm on the image displaying element 6 and a light beam (broken line) emitted from a position at a distance of 0.5 mm from the light emitting center position on the side opposite to the reflector 2 side in a direction perpendicular to the optical axis reaches a position of 5.59 mm on the image displaying element 6. Therefore, divergence of the light beam becomes 5.59-13.00 = -7.41 mm. On the other hand, in the first embodiment in Fig. 16B, a light beam (solid line) emitted from the light emitting center position in a direction perpendicular to the optical axis reaches a position of -11.39 mm on the image displaying element 6 and a light beam (broken line) emitted from a position at a distance of 0.5 mm from the light emitting center position on the side opposite to the reflector 2 side in a direction perpendicular to the optical axis reaches a position of -10.54 mm on the image displaying element 6. Therefore, divergence of the light beam becomes -10.54-(-11.39) = -0.85 mm.

Generally, in the conventional example in Figs. 25A, divergence of the light beam (divergence between the solid line and the broken line) becomes larger as the position of the image displaying element 6 lies far from the reflector. On the contrary, in the first embodiment, divergence of the light beam becomes small. The reason thereof is the following: although the broken line after reflection by the reflector 2 is bent toward the optical axis side in comparison with the solid line, the light beam height of the broken line is larger than the light beam height of the solid line at the following lens 5, so that refractive force to the broken line is larger than the solid line. Therefore, the light beam of the broken line is then sharply bent toward the opposite direction in comparison with the solid line, so that the position of the broken line on the image displaying element 6 comes closer to the position of the solid line.

Accordingly, in the mode of the first embodiment, it is possible to place the image displaying element 6 at a position far from the reflector 2 and the embodiment can be also applied to modes other than the single-plate mode having one image displaying element 6. This is because a space of placing a dichroic mirror for color separation is also required in the three-plate mode using three image displaying elements 6.

As described above, the illuminating optical apparatus of the first embodiment has beam shape converting function for converting a circular beam shape into a rectangular beam shape and also easily achieve uniform light quantity distribution without integrators such as expensive multi-lens arrays and light beam dividing means such as prism arrays. Therefore, cost reduction can be achieved.

In addition, it is possible to provide a projection display which can achieve uniform light quantity distribution with low cost, by applying the illuminating optical apparatus to a projection display mounted in a housing (not shown) with a drive circuit (not shown) for driving an image displaying element, a projection lens (not shown) for expanding and projecting the optical image formed on the image displaying element, the lens being driven by the drive circuit, a power circuit (not shown) for supplying power to the drive circuit and a light emitting part, and the like.


(Second Embodiment)

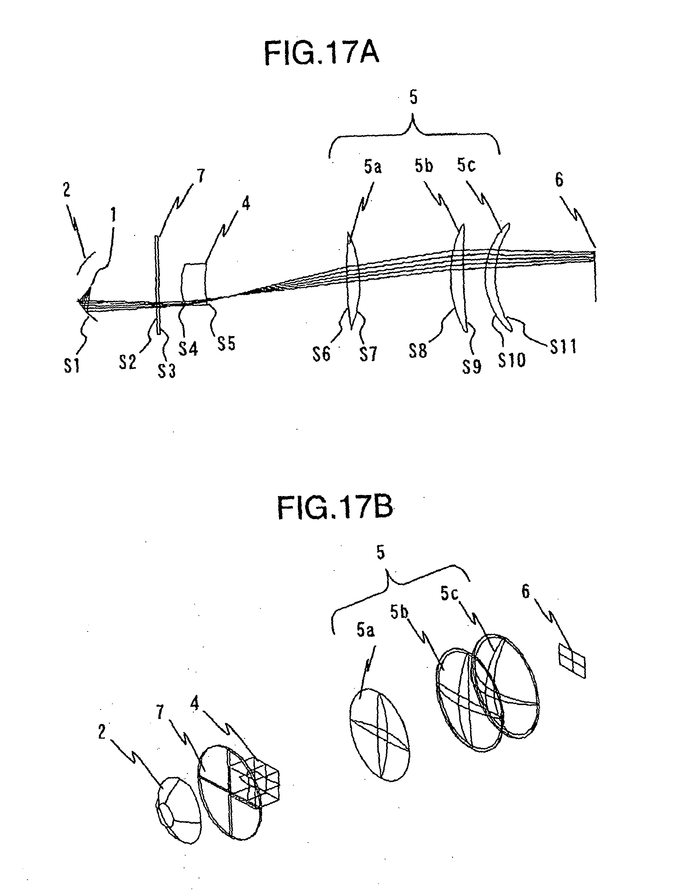

Now, a second embodiment will be specifically described with reference to Figs. 17A to 20C.

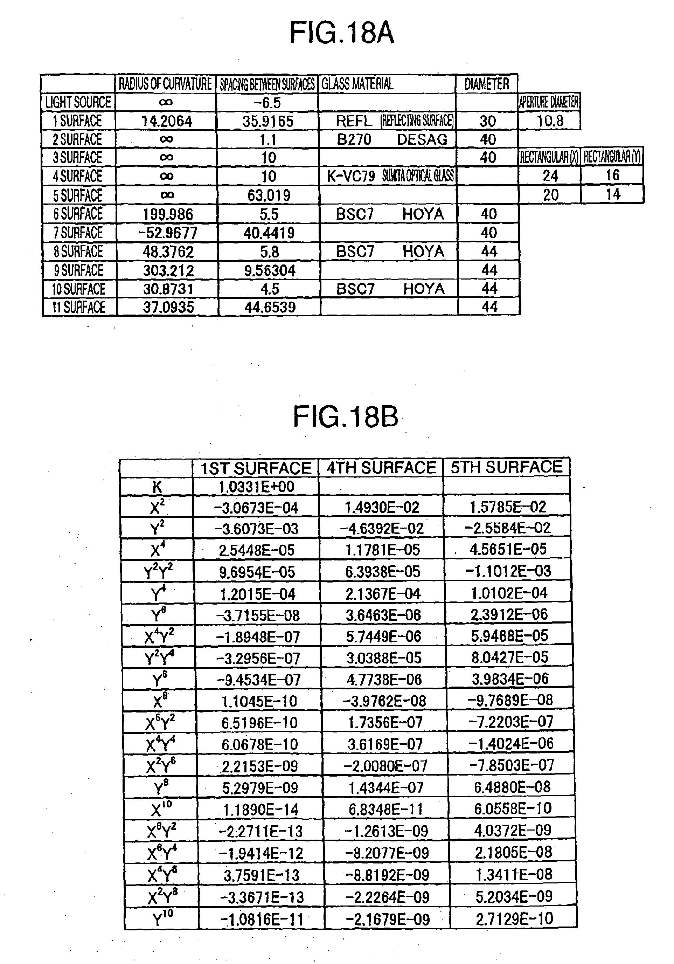

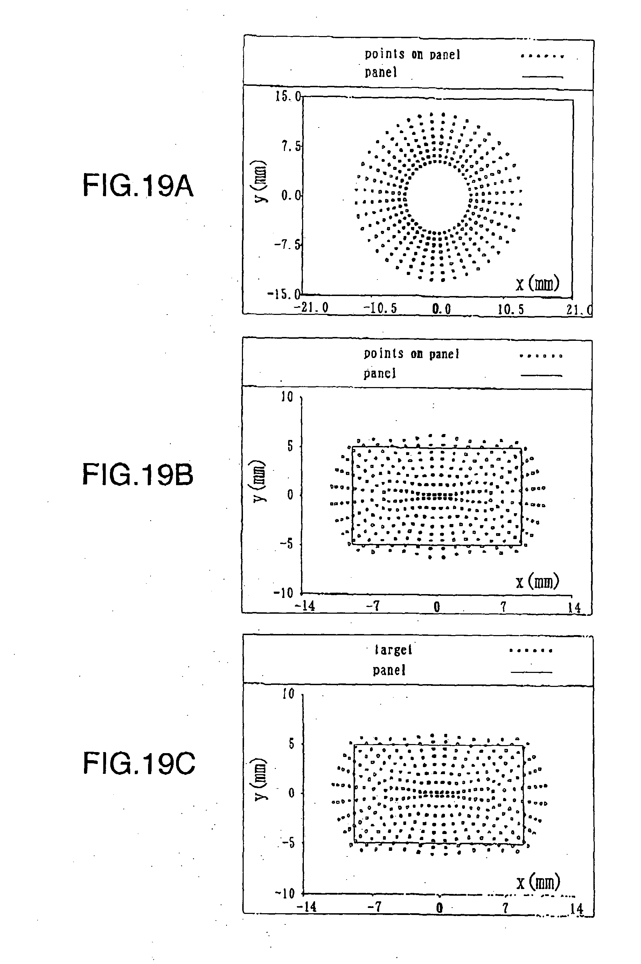

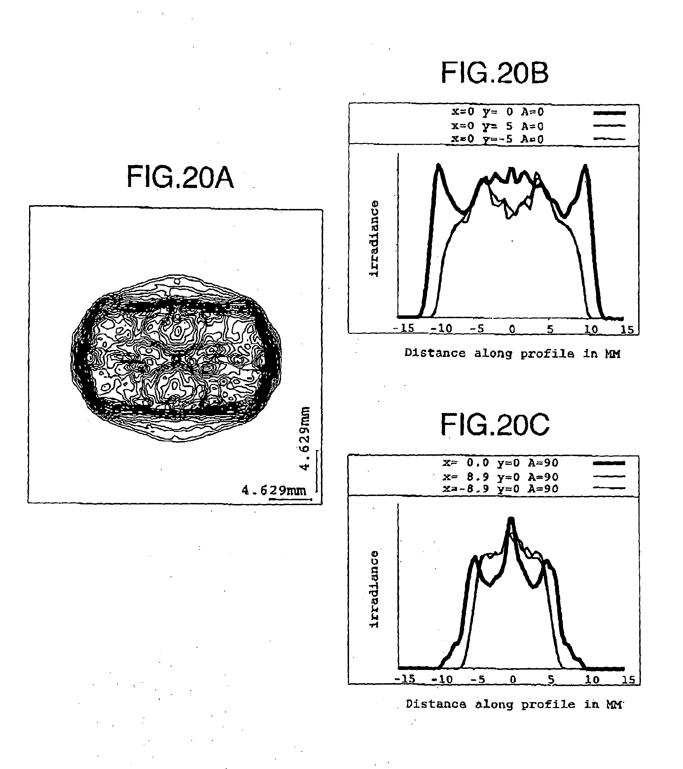

Figs. 17A and 17B are views showing lenses in the second embodiment, Figs. 18A and 18B are views showing lens data of the second embodiment, Figs. 19A, 19B and 19C are views showing mappings of the second embodiment and Figs. 20A, 20B and 20C are views showing raster performance in the image displaying element of the second embodiment.

Figs. 17A and 17B are different from Figs. 1A and 1B which are schematic views in that the auxiliary reflector 3 is not shown and a protective glass 7 is disposed. However, the basic function is the same as in Figs. 1A and 1B and the description thereof is omitted. Factors in Figs. 18A and 18B are factors of the free-form surface shape described in Fig. 5.

The mapping shown in Figs. 19A, 19B and 19C relates to light beam emitted from the center position of the light emitting part 1. Fig. 19A shows X-Y coordinates of intersections of the light beam on the reflector 2 having a free-form surface shape, Fig. 19B shows X-Y coordinates of intersections of the light beam on the image displaying element 6 and Fig. 19C shows target X-Y coordinates of the light beam on the image displaying element 6.

As shown in Fig. 19A, in the second embodiment, the angle $\alpha$ described in Fig. 3 is divided into 8 parts in a range of 45° to 90° and the angle $\beta$ is divided into 40 parts in a range of 0° to 360° (based on symmetry, the angle $\beta$ is divided into 10 parts in a range of 0° to 90°) and therefore light beams at a total of 320 points (based on symmetry, 80 times 4) are shown. As can be clearly seen from Fig. 19B, the same intersection coordinates are achieved as the target coordinates determined by the method described in Figs. 6A to 9B.

Accordingly, it is found that the illuminating optical apparatus according to the second embodiment converts a circular light beam into a rectangular light beam and favorably irradiates the image displaying element 6 with a rectangular beam shape. As a result, use efficiency of light is improved.

Figs. 20A, 20B and 20C show raster performance of irradiated light quantity in the image displaying element 6. Fig. 20A is a contour representation and Fig. 20B is a view showing light quantity distributions in a horizontal direction at upper end, center, lower end of the image displaying element 6, and Fig. 20C is a view showing light quantity distributions in a vertical direction at left end, center, right end of the image displaying element 6.

As can be clearly seen from Figs. 20A, 20B, 20C, uniform light quantity distribution is easily achieved without using expensive multi-lens arrays as integrators and light beam dividing means such as prism arrays. Therefore, cost reduction can be achieved.

(Third Embodiment)

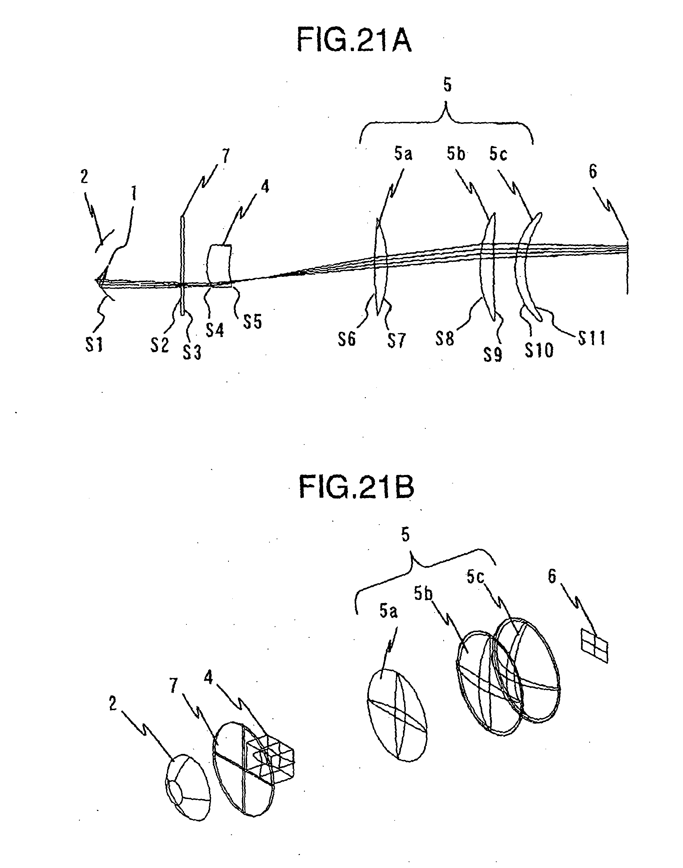

Now, a third embodiment will be specifically described with reference to Figs. 21A to 24C.

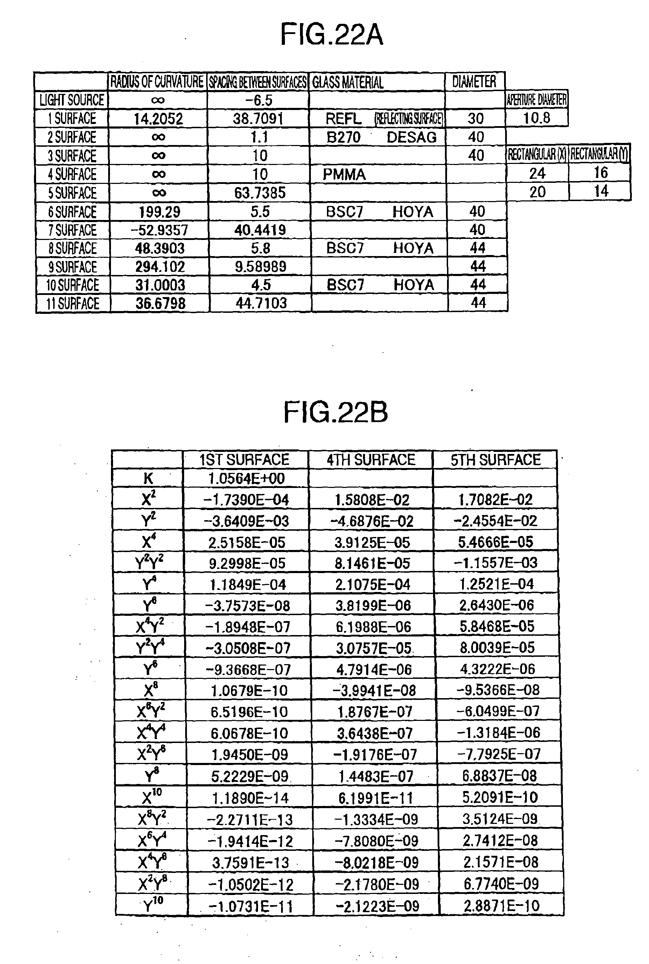

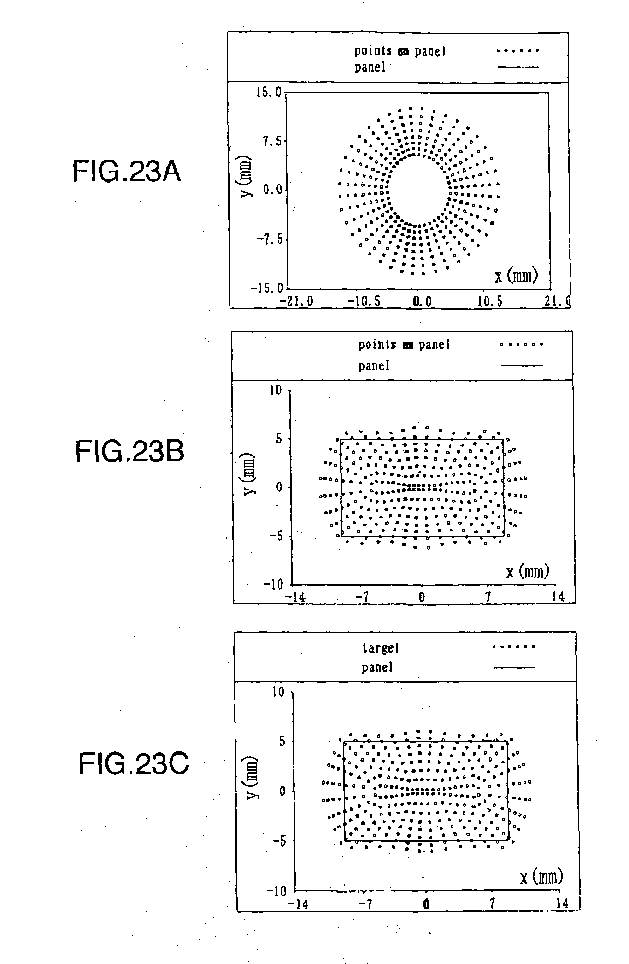

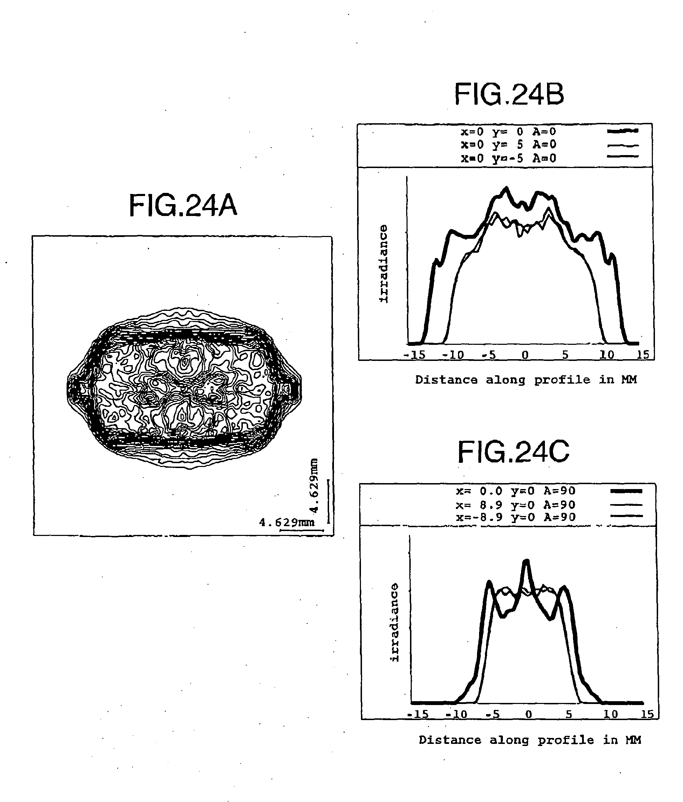

Figs. 21A and 21B are views showing lenses in the third embodiment, Figs. 22A and 22B are views showing lens data of the third embodiment, Figs. 23A, 23B and 23C are views showing mappings of the third embodiment and Figs. 24A, 24B and 24C are views showing raster performance in the image displaying element of the third embodiment.

Figs. 21A and 21B are different from Figs. 1A and 1B which are schematic vies in that the auxiliary reflector 3 is not shown and a protective glass 7 is disposed. However, the basic function is the same as in Figs. 1A and 1B and the description thereof is omitted. Factors in Figs. 22A and 22B are factors of the free-form surface shape described in Fig. 5.

The mapping shown in Figs. 23A, 23B and 23C relates to light beam emitted from the center position of the light emitting part 1. Fig. 23A shows X-Y coordinates of intersections of the light beam on the reflector 2 having a free-form surface shape, Fig. 23B shows X-Y coordinates of intersections of the light beam on the image displaying element 6 and Fig. 23C shows target X-Y coordinates of the light beam on the image displaying element 6.

As shown in Fig. 23A, in the third embodiment, the angle $\alpha$ described in Fig. 3 is divided into 8 parts in a range of 45° to 90° and the angle $\beta$ is divided into 40 parts in a range of 0° to 360° (based on symmetry, the angle $\beta$ is divided into 10 parts in a range of 0° to 90°) and therefore light beams at a total of 320 points (based on symmetry, 80 times 4) are shown. As can be clearly seen from Fig. 23B, the same intersection coordinates are achieved as the target coordinates determined by the method described in Figs. 6A to 9B.

Accordingly, it is found that the illuminating optical apparatus according to the third embodiment converts a circular light beam into a rectangular light beam and favorably irradiates the image displaying element 6 with a rectangular beam shape. As a result, light use efficiency is improved.

Figs. 24A, 24B and 24C show raster performance of irradiated light quantity in the image displaying element 6. Fig. 24A is a contour representation and Fig. 24B is a view showing light quantity distributions in a horizontal direction at upper end, center, lower end of the image displaying element 6, and Fig. 24C is a view showing light quantity distributions in a vertical direction at left end, center, right end of the image displaying element 6.

As can be clearly seen from Figs. 24A, 24B and 24C, uniform light quantity distribution is easily achieved without expensive multi-lens arrays as integrators and light beam dividing means such as prism arrays. Therefore, cost reduction can be achieved.

(Fourth Embodiment)

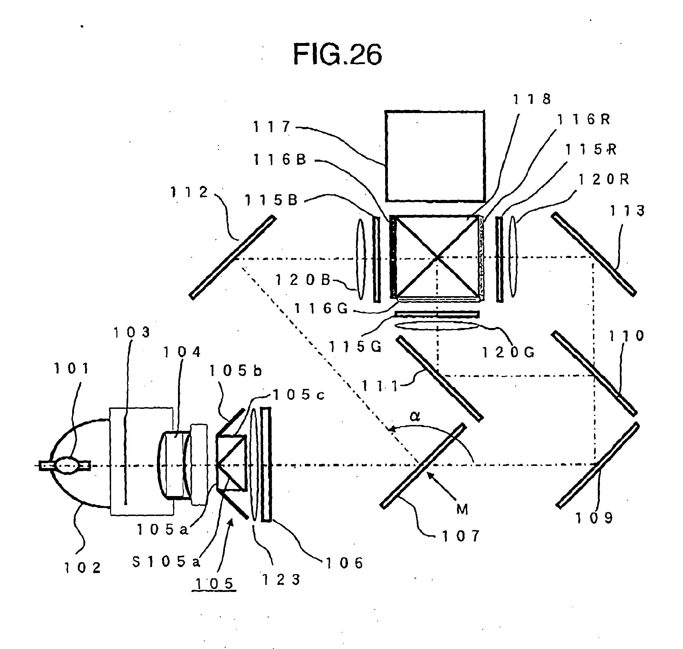

Fig. 26 is a schematic view of optical system of a projection display showing a fourth embodiment.

In Fig. 26, reference numeral 101 denotes a lamp tube which is a light source. As the light source, an ultra-high pressure mercury lamp, a xenon lamp, a metal halide lamp or the like can be used. A reflector 102 serves to reflect light emitted from the lamp tube 101 to focus the light onto an illuminating system and the shape of an inner reflecting surface of the reflector 102 is a free-form surface shape expressed by Formula 1. Then, by cooperative lens action of the reflector 102 with a first lens element 104 also having a free-form surface shape, the light (having a circular light shape in a cross section perpendicular to the optical axis) emitted from the lamp tube is converted into a rectangular light having a cross sectional shape similar to an effective display region of a liquid crystal panel 115 (115R, 115G, 115B). The light shape conversion will be described later.

An ultraviolet reflecting filter 103 disposed between the light source and the first lens element 104 serves to reflect light in the ultraviolet range (for example, a range of wavelength of not more than 430 nm) among the light emitted from the lamp tube 101.

The above described rectangular light emitted from the first lens element 104 travels into a polarization converting part 105 which performs polarization conversion for polarizing the light from the light source having no polarization (non-polarized light) in a predetermined polarization direction.

The polarization converting part 105 comprises a prism block 105a, a reflecting mirror 105b, and a $\lambda/2$ plate 105c.

As shown in Fig. 26, in the prism block 105a, a polarization separating film S105a made of a dielectric multi-layer film or an organic multi-layer film is formed at a V-shaped joint surface of three prism blocks. The polarization separating film S105a has polarization separation action of reflecting a desired polarization component (for example, S wave) and allowing P wave to pass through. The S wave reflected by the polarization separating film S105a is passed through the λ/2 plate 105c and converted into P wave, which is emitted along the optical axis by the action of the reflecting mirror 105b. Although the reflecting mirror 105b may be a total reflection mirror, it is also possible to select a mirror having a reflecting surface on which a dielectric multi-layer film or a metal reflecting film is formed depending on desired characteristics.

A field lens 123 is a second lens element having an action of efficiently directing the rectangular light of P wave emitted from the polarization converting part 105 into the liquid crystal panel 115.

A first polarization plate 106 disposed on an exit side of the field lens 123 is disposed so as to improve degree of polarization of the light polarized in the same polarization direction as P wave by the polarization converting part 105. As the first polarization plate 106, a polarization plate is desirable which has high energy density and is made of an inorganic as a high light resistance material because the light before spectrometry (before color separation) passes through the plate. Further, in order to reduce damage due to light, it is desirable to select a reflective polarization plate, so that higher reliability can be obtained. As shown in Fig. 26, when a reflective inorganic polarization plate is positioned vertically to the optical axis, the reflected light directly returns back to the lamp tube 101, which can cause damage on the lamp. In such a case, the reflective inorganic polarization plate is preferably positioned obliquely to the optical axis so that the return light does not directly return back to the lamp tube. Thereby, the lifetime of the lamp is not shortened.

The light having its degree of polarization improved by the first polarization plate 106 travels into a first dichroic mirror 107. The first dichroic mirror 107 is a first color separating part for separating a first primary color light from second and third primary color lights. Generally, a dichroic mirror is made by forming a dielectric multi-layer film on a glass substrate by deposition or sputtering. Here, the dichroic mirror 107 has a characteristic of reflecting blue color light (first primary color light).

Blue color light (also referred to as B light) reflected by the first dichroic mirror 107 is guided through a total reflection mirror 112 and a third lens element 120B to the liquid crystal panel 115B for B light.

The first dichroic mirror 107 is positioned so that the optical axis of the reflected light (also referred to as reflected light axis) makes a predetermined angle α (110° or larger, for example) with respect to the positive direction (a traveling direction of incident light) of the optical axis of the incident light (also referred to as incident light axis), as shown in Fig. 26. That is, the incident light axis and the normal to the first dichroic mirror 107 are set to make an angle smaller than 45° (35° if the angle α is 110°) (The reason thereof will be described later).

On the other hand, the optical axis of the second primary color light and third primary color light having passed through the first dichroic mirror 107 is bent by 90° by the total reflection mirror 109 which is positioned obliquely by 45° with respect to the light axes, so that the light travels into a second dichroic mirror 110.

The second dichroic mirror 110 is a second color separating part which is positioned obliquely by 45° with respect to the optical axis and separates the second primary color light from the third primary color light. Here, the dichroic mirror 110 has a characteristic of reflecting green light (second primary color light).

The optical axis of green light (also referred to as G light) which is the second primary color light reflected by the second dichroic mirror 110 is bent by 90° and is further bent by 90° by the total reflection mirror 111 so that the light is guided through a third lens element 120G to the liquid crystal panel 115G for G light. The optical axis of red light (also referred to as R light) which is the third primary color light having passed through the second dichroic mirror 110 is bent by 90° by the total reflection mirror 113 so that the light is guided through a third lens element 120R to the liquid crystal panel 115R for R light.

The third lens element 120 (120R, 120G, 120B) serves to enhance contrast performance by reducing light ray angle of the light which travels into a screen periphery parts of the liquid crystal panel 115 (115R, 115G, 115B) corresponding to respective primary color light. Although the third lens element 120 is formed of one lens here, it is not limited to this manner and may be formed of a plurality of lenses (for example, two lenses) for the purpose of aberration correction, for example.

Although a polarization plate is conventionally disposed on an incident side of the liquid crystal panel 115, the incident side polarization plate is eliminated in the fourth embodiment because the first polarization plate 106 enhances degree of polarization. Accordingly, cost reduction is achieved.

Now, an optical path length from an intersection point M of the first dichroic mirror 107 and the optical axis to the liquid crystal panel 115B for B light and optical path lengths from the point M to the liquid crystal panel 115R for R light and the liquid crystal panel 115G for G light will be described.

As apparent from Fig. 26, the optical path length of R light path and the optical path length of G light path are equal. On the other hand, as already described, the first dichroic mirror 107 is positioned so that the angle α made by the optical axis of the incident light (incident light axis) and the optical axis of the reflected light (reflected light axis) is 110° or larger, in the fourth embodiment. Therefore, the angle made by the optical axis of the incident light (incident light axis) and the normal to the first dichroic mirror 107 is 35° or smaller, so that the optical path length of the B light path from the point M becomes long. Thus, it is possible to make the optical path length of B light path equal to the optical path length of R light path and the optical path length of G light path. In other words, the angle $\alpha$ is predetermined so that the optical path length of B light path is equal to the optical path lengths of other primary color light paths. However, if difference between the optical path lengths of R light path, G light path, and B light path is within $\pm 5\%$, color unevenness does not practically occur.

Each color light which travels into each liquid crystal panel 115 is subjected to light strength modulation (also referred to as modulation, simply) depending on image signals (not shown) for each color by a drive circuit (not shown) in order to form an optical image. The optical image of each color light formed on each liquid crystal panel 115 travels through an exit side polarization plate 116 (116R, 116G, 116B) into a cross prism 118.

In the fourth embodiment, the exit side polarization plate 116 is directly attached on the cross prism 118 with sticky agent or adhesive. In this case, in order to further enhance cooling efficiency, it is desirable that the polarization plate is attached on a substrate of sapphire, quartz or the like which has larger heat conductivity than glass and then attached to the cross prism 118 with sticky agent or adhesive.

The cross prism 118 which is a color combining part (also referred to as a light combining part) combines the light images of the color lights to form a color image. Then, the color image is expanded and projected onto a screen (not shown) by a projection lens 117 which is a projecting optical unit.

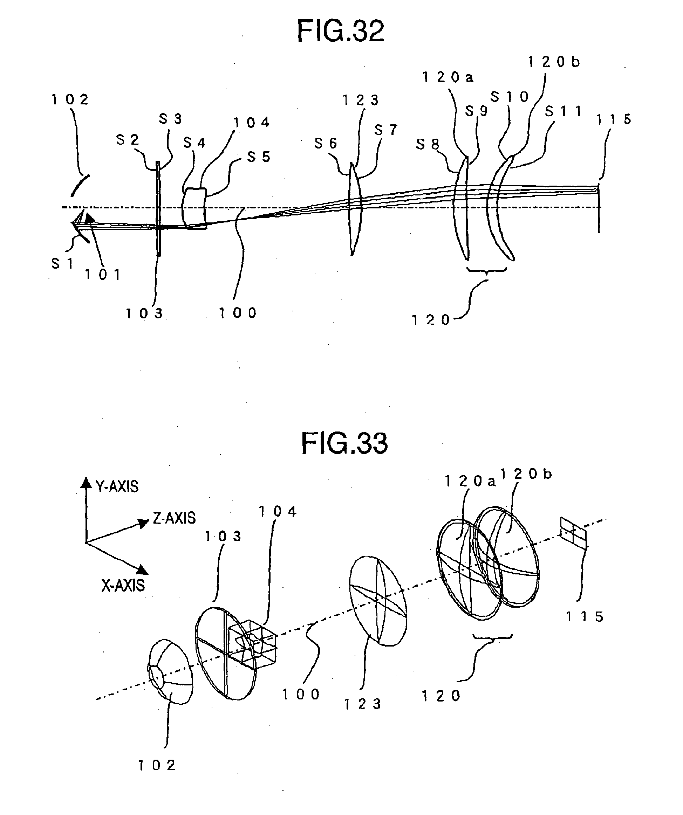

Next, light shape conversion by the reflector 101 and the first lens element 104 will be described with reference to Figs. 32 to 37B.

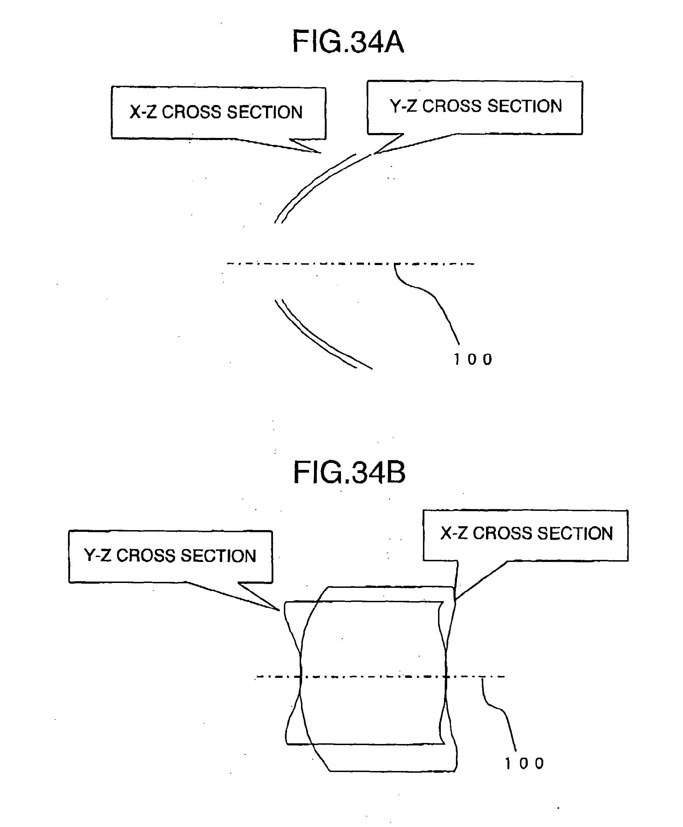

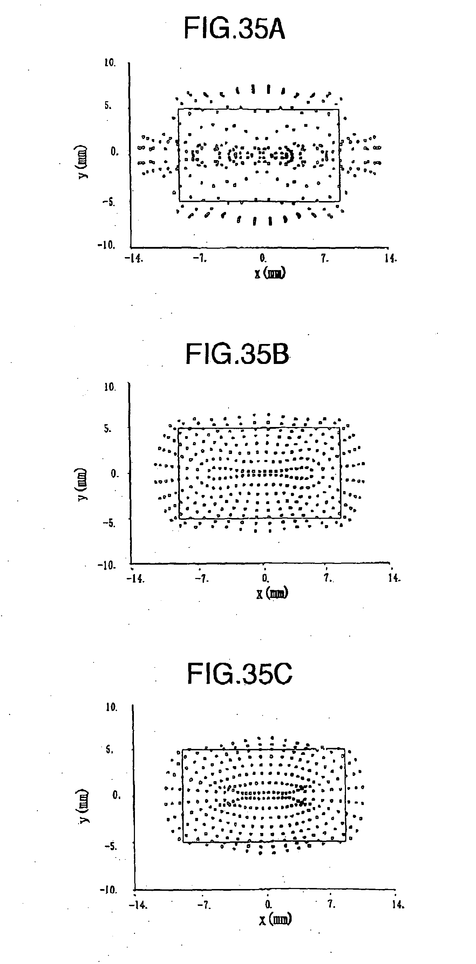

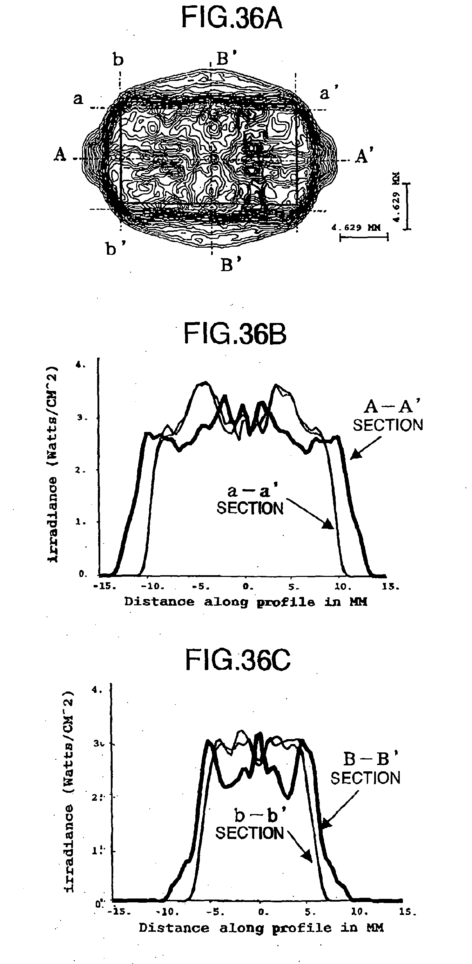

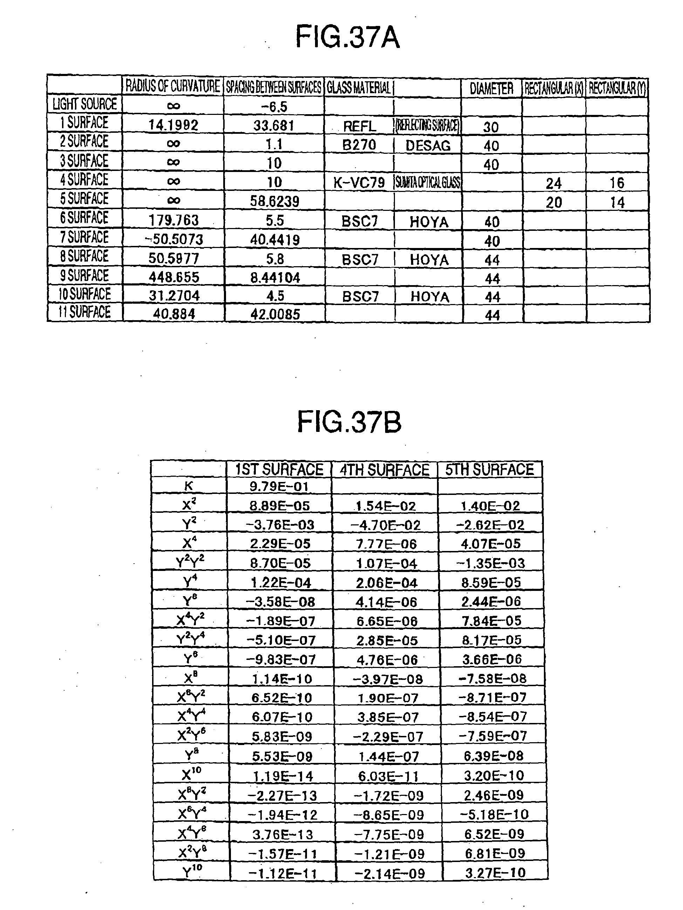

Fig. 32 is a cross sectional view including an optical axis and showing arrangement of optical parts in the case of actually designing an illuminating optical system which guides light from the light source to the liquid crystal panel in accordance with the fourth embodiment, wherein actual bending of the optical paths is shown linearly. Fig. 33 is a perspective view of the illuminating optical system shown in Fig. 32. Figs. 34A and 34B are views showing free-form surface shapes of the reflector and the first lens element according to the fourth embodiment. Figs. 35A, 35B and 35C are views showing shape of light obtained on the effective display region of the liquid crystal panel according to the fourth embodiment. Figs. 36A, 36B and 36C are views showing a result of light quantity distributions obtained on the liquid crystal panel according to the fourth embodiment, the result being determined by light tracing. Figs. 37A and 378 are views showing lens data of the illuminating optical system according to the fourth embodiment. In the drawings, parts having the same function as the parts shown in Fig. 26 are denoted by the same reference characters.

As shown in Figs. 32 and 33, the third lens element 120 is divided into two lens elements 120a and 120b in order to image the light from the light source to match to the shape of the effective display region of the liquid crystal panel 115 without aberration. In addition, a polarization converting part 105 is not shown or provided. This is because surface spacing between an exit surface of the first lens element 104 and the field lens 123 is converted into an equivalent optical distance (a product of surface distance between two surfaces and refractivity of a medium) for air (refractivity of 1.0). In the fourth embodiment, the surface spacing between the exit surface of the first lens element 104 and the field lens 123 is 58.6239 mm as a value after conversion (see Fig. 37 for details).

The reflector 102 serves to reflect and focus the light emitted from the lamp tube 101 onto the illuminating optical system. In order to convert the light having a circular cross section (circular light) emitted from the lamp tube into a rectangular light having a rectangular shape similar to the effective display region of the liquid crystal panel, an inner reflecting surface of the reflector 102 and the surface of the first lens element have free-form surface shapes expressed by Formula 1.

Here, perpendicular coordinates are introduced for ease of the following description. It is defined that an optical axis 100 of the illuminating optical system is Z axis and, in a plane perpendicular to Z axis, a direction parallel to long sides of the rectangular of the effective display region of the liquid crystal panel is X axis direction and a direction parallel to short sides of the rectangular is Y axis direction.

In the fourth embodiment, the reflector 102 has a cross sectional shape which is different for X-Z cross section and Y-Z cross section, as shown in Figs. 33 and 34A. In addition, the first lens element 104 has a free-form surface shape in cross section which is different for X-Z cross section and Y-Z cross section, as also shown in Figs. 33 and 34B. That is, the reflector 102 and the first lens element 104 have rotationally asymmetrical free-form surface shapes with respect to the optical axis 100 of the illuminating optical system including a light emitting center of the light source.

After the light from the lamp tube is reflected on the reflecting surface of the reflector 102 having the rotationally asymmetrical free-form surface shape and subjected to rotationally asymmetrical reflection action, the light is further subjected to rotationally asymmetrical refractive action by the first lens element 104 having the rotationally asymmetrical free-form surface shape. As a result, by cooperative lens action of the reflector 102 and a first lens element 104, the light is converted into a rectangular light having a shape similar to the shape of the effective display region of the liquid crystal panel 115. The rectangular light emitted from the first lens element 104 intersects the optical axis 100 and is subjected to refractive action by the field lens 123 and the third lens element 120 (120a, 120b) and then irradiated onto the liquid crystal panel 115.

The expression "intersects the optical axis" used here means that the light ray, which is reflected by the reflector 102 and travels into the first lens element 104 and is subjected to refraction action by the first lens element 104 to direct toward the field lens 123, goes across the optical axis 100 into a region on an opposite side with respect to the optical axis 100, when the light ray is projected onto a plane formed by the optical axis 100 and an intersection of the light ray emitted from the lamp tube 101 and the reflector 2.

That is, in the fourth embodiment, a mapping mode is employed in which points on the reflector 102 and points on the liquid crystal panel 115 correspond to each other so that the light ray reflected by the reflector 102 among the light ray emitted from the lamp tube 101 reaches a point on the liquid crystal panel 115 which is in a point-symmetrical direction with respect to the optical axis 100, for example.

Possible factors in the fourth embodiment corresponding to Formula 1 are shown in Figs. 37A and 37B.

The following can be understood from Figs. 37A and 37B. According to Figs. 37A and 37B, distance from the light source to the reflector reflecting surface which is a first surface S1 is 6.5 mm and an origin point of the reflector reflecting surface is in -Z direction (negative direction of Z axis) with respect to the light source, i.e. behind the light source, in the coordinates shown in Fig. 33. The first surface S1 denotes the reflector reflecting surface and its radius of curvature is 14.1992 mm and its shape is not only spherical, but also a free-form surface shape having factors corresponding to Formula 1.

A second surface S2 is an incident surface of an ultraviolet reflecting filter 103 shown in Figs. 32 and 33, having infinite radius of curvature, i.e. a planar surface, and distance along the optical axis from the reflector reflecting surface to the incident surface (second surface) is 33.681 mm. In addition, it is shown that surface spacing between the second surface S2 and a third surface S3, i.e. thickness of the ultraviolet reflecting filter 103 is 1.1 mm and glass material is B270 (manufactured by Corning Incorporated).

The third surface S3 is an exit surface of the ultraviolet reflecting filter 103, having infinite radius of curvature, i.e. a planar surface, and distance from the third surface to the incident surface of the first lens element 104 which is a fourth surface S4 is 10 mm and glass material (medium) is air. If the glass material column is blank, medium is air (refractivity of 1.0).

The fourth surface S4 is an incident surface of the first lens element 104, having infinite radius of curvature, i.e. a planar surface, and its shape is not only spherical, but also a free-form surface shape having factors according to Formula 1 and glass material (medium) is K-VC79 (manufactured by Sumita Optical Glass Inc.). So far, the data of the fourth embodiment shown in Figs. 37A and 37B has been described.

Shapes of light rays obtained on the effective display region of the liquid crystal panel according to the lens data described in Figs. 37A and 37B are shown in Figs. 35A, 35B and 35C. Although a light source such as a high pressure mercury lamp has an arc size with finite dimensions because it emits light between two electrodes, the light source was designed as a point light source on design and evaluation was performed by changing the position of the point light source back and forth. Fig. 35B shows a result of light ray tracing for the design center (a light emitting center position of the lamb tube). Fig. 35A shows a result of light ray tracing in the case of shifting the position of the point light source from the light emitting center position toward the reflector side (in -Z direction) by 0.5 mm. On the other hand, Fig. 35C shows a result of light ray tracing in the case of shifting the position of the point light source from the light emitting center position toward the side far from the reflector (in +Z direction) by 0.5 mm.

As apparent from Figs. 35B and 35C, the light rays, which are emitted from the design center position and from the position at a distance of 0.5 mm from the design center position toward the side far from the reflector, rectangularly irradiate the effective display region of the liquid crystal panel shown with a rectangular frame shown by solid line. It is also confirmed that the light ray emitted from the position at a distance of 0.5 mm from the design center position toward the reflector covers the effective display region of the liquid crystal panel. That is, according to the fourth embodiment, blur on the image surface is small even though the light source has a finite length, so that this embodiment can be sufficiently adapted to the light source having an arc length of 1.0 mm.

Fig. 36A shows equivalent light quantity lines, where light ray tracing is performed by increasing the number of evaluation light rays at three light source positions as described above and respective results are superimposed and light quantity distribution in the liquid crystal panel surface which is an evaluation surface is determined by calculation,.

Fig. 36B is a two-dimension representation of the light quantity distributions in A-A' cross section and a-a' cross section of the equivalent light quantity line representation shown in Fig. 36A. Similarly, Fig. 36C is a two-dimension representation of the light quantity distributions in B-B' cross section and b-b' cross section of the equivalent light quantity line representation shown in Fig. 36A.

As can be also seen from the evaluation results of the light quantity distributions in Figs. 36A, 36B and 36C, according to the fourth embodiment, the light quantity distribution in the image surface is uniform even though the light source has a finite length and therefore the embodiment can be sufficiently adapted to the light source having an arc length of 1.0 mm. Namely, uniform light quantity distribution is achieved without using a pair of lens arrays as integrators.

As described above, in the projection display according to the fourth embodiment, the reflecting surface of the reflector, which is a reflecting part for reflecting and directing light from the light source into the first lens element, and the first lens element have rotationally asymmetrical free-form surface shapes, so that a shape (a circular shape) of light distribution emitted from the light source can be converted into a rectangular shape similar to the shape of the effective display region of the image displaying element. Therefore, a pair of lens arrays provided in the conventional illuminating system is eliminated and thereby cost reduction can be achieved. In addition, because the first polarization plate is disposed for improving degree of polarization before color separation, incident side polarizing plates which are conventionally disposed on the incident sides of the liquid crystal panels can be eliminated and accordingly cost reduction can be achieved.

Further, an angle made by the optical axis of the light reflected by the dichroic mirror 107 with respect to the optical axis of the illuminating system is 110° or larger so that the optical path lengths from the light source to the liquid crystal panels corresponding to respective primary color lights can be equal to each other. As a result, color unevenness and brightness unevenness can be reduced which may appear in the image expanded and projected onto the screen by the projection lens after color combination. Moreover, with equal optical path lengths, it is not necessary to use relay lens optical system and accordingly a compact illuminating optical system can be achieved.

Additionally, in the present invention, an illuminating optical system is made to be one which does not use lens arrays and therefore an illuminating optical system can be achieved at low cost and further it is not necessary to keep relative position of a pair of lens arrays with high accuracy in manufacture, so that a projection display which is easy to assemble can be provided.

(Fifth Embodiment)

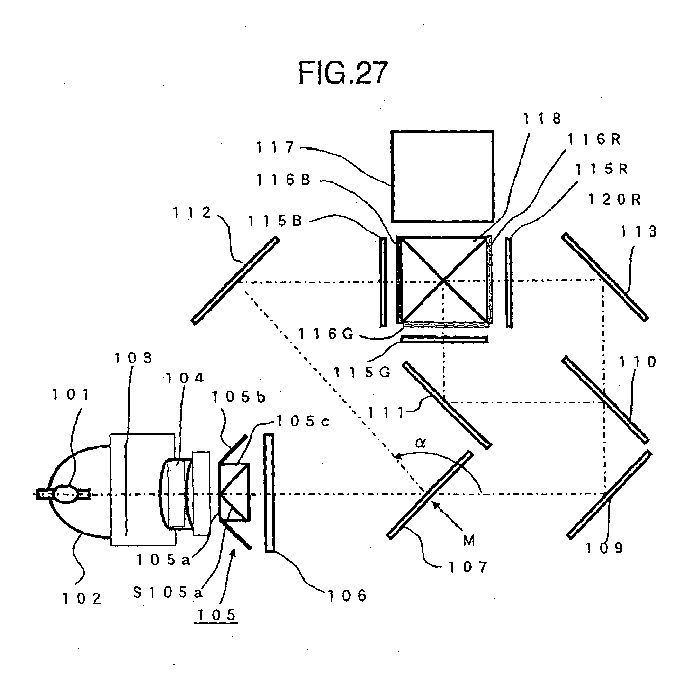

Fig. 27 is an illustrative view of a fifth embodiment. Parts having the same function as the parts shown in Fig. 26 are denoted by the same reference characters.

In a projection display of the fifth embodiment shown in Fig. 27, in contrast to the projection display of the fourth embodiment shown in Fig. 26, the field lens 123 having an action of efficiently directing light to the liquid crystal panel 115 and the third lens element 120 corresponding to each liquid crystal panel are eliminated.

It may be also possible that the field lens and the third lens element are removed for the purpose of cost reduction while slightly degrading performance for uniformity of light quantity distribution, depending on practical tolerant level or application.

According to the fifth embodiment, further cost reduction can be achieved.

(Sixth Embodiment)

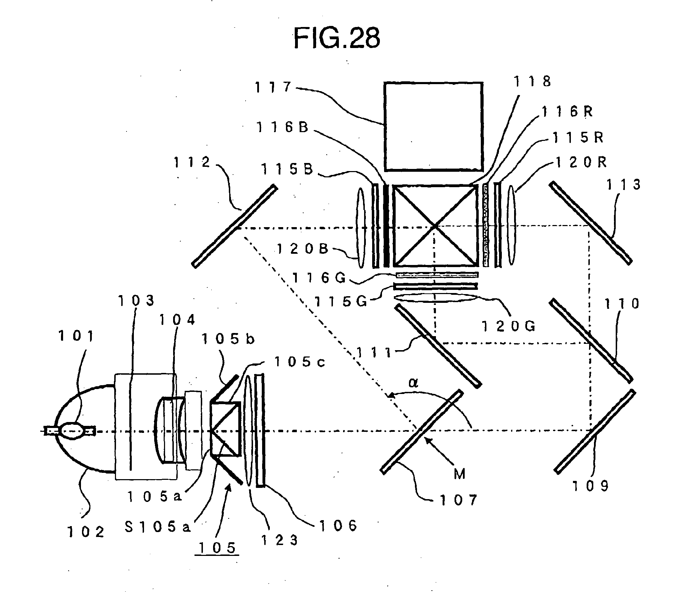

Fig. 28 is an illustrative view of a sixth embodiment. Parts having the same function as the parts shown in Fig. 26 are denoted by the same reference characters.

A difference between the sixth embodiment shown in Fig. 28 and the fourth embodiment shown in Fig. 26 is that exit side polarizing plates 116 (116R, 116G, 116B) are attached on a blue plate glass, a white plate glass, or a substrate of sapphire or quartz having high heat conductivity and then placed between the liquid crystal panel and the cross prism so that both sides of the exit side polarization plate and its substrate can be cooled in order to enhance efficiency of forced air cooling.

(Seventh Embodiment)

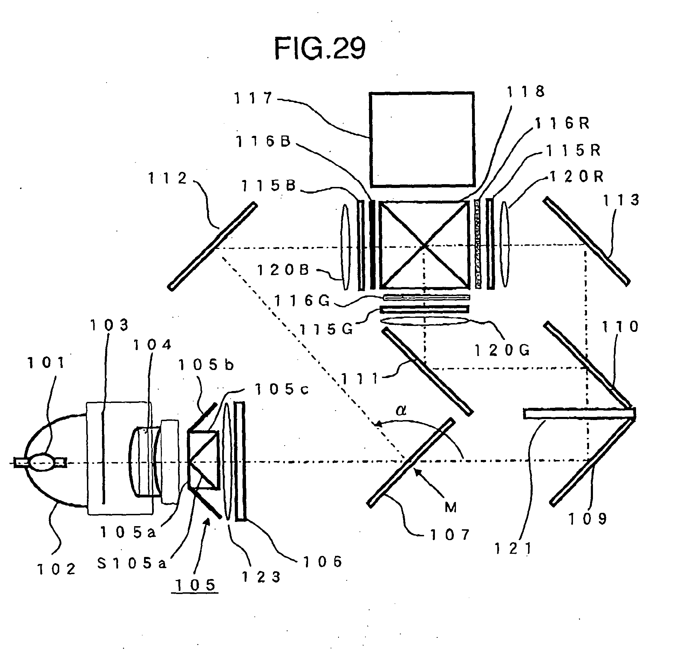

Fig. 29 is an illustrative view of a seventh embodiment. Parts having the same function as the parts shown in Fig. 26 are denoted by the same reference characters.

In the seventh embodiment, a polarization plate 121 which is a second polarization plate is additionally disposed between the first color separation part (dichroic mirror 107) and the second color separation part (dichroic mirror 110) in the sixth embodiment shown in Fig. 28.

As a result, it is possible to further improve degree of polarization of green and red lights having high spectral luminous efficiency and accordingly contrast performance of the expanded image obtained on a screen (not shown) is improved.

Because light in a wavelength range from green to red passes through the polarization plate 121 and thus energy density is high there, it is desirable to use an organic polarization plate or an inorganic polarization plate of high light resistance material. It is desirable to select a reflective polarization plate to reduce damage due to light, so that higher reliability can be achieved.

If the reflective inorganic polarization plate as the polarization plate 121 is positioned vertically to the optical axis as shown in Fig. 29, the reflected light directly returns back to the lamp tube, which can cause damage on the lamp. In such a case, the reflective inorganic polarization plate is preferably positioned obliquely to the optical axis so that the return light does not directly return back to the lamp tube. Thereby, the lifetime of the lamp is not shortened.

(Eighth Embodiment)

Then, an eighth embodiment will be described in which the projection display of the above described fourth to seventh embodiments is applied to a rear projection display.

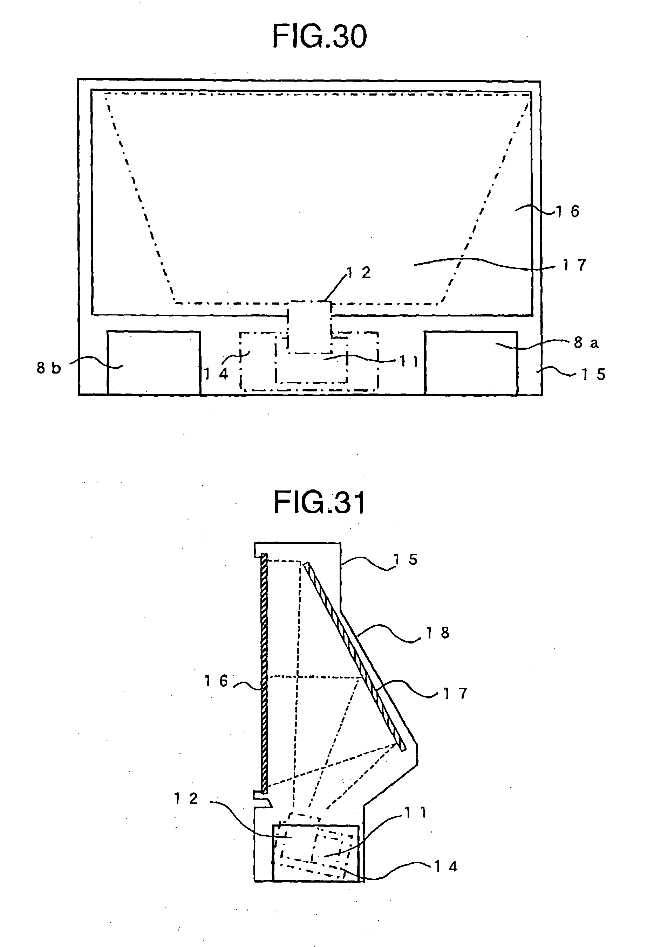

Fig. 30 is a front view showing a rear projection display using the projection display of fourth to seventh embodiments. In Fig. 30, reference numeral 11 denotes an illuminating optical system, reference numeral 12 denotes a projection optical unit, reference numeral 15 denotes a housing, reference numeral 16 denotes a screen and reference numeral 17 denotes an optical path return mirror. Reference numeral 14 denotes an optical unit for irradiating light from the light source onto an image displaying element (not shown) by means of the illuminating optical system 11 and expanding and projecting the image formed on the image displaying element according to image signals by means of the projection optical unit 12. By positioning the optical unit 14 in the center of the screen of the set, a signal circuit substrate 8a and a power circuit substrate 8b and the like are incorporated in the resultant right and left spaces to form the rear projection display. The optical unit 11 is placed in the center lower part of the housing 15 as shown in Fig. 30 and the image light projected from the optical unit 11 is directly projected from the rear of the screen 16.

Fig. 31 is a side view showing the rear projection display using the projection display of fourth to seventh embodiments. In this drawing, parts which are identical to the parts shown in Fig. 30 are denoted by the same reference characters.

In order to reduce depth and height of the rear projection display, a projection optical unit (projection lens) provided with an optical path return part in the lens barrel has been dominantly used. Image light expanded by the projection optical unit 12 is first returned by the optical path return mirror 17 disposed on the side of a back cover 18 of the apparatus and then projected onto the screen 16. Thus, a compact rear projection display can be achieved.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

**Claims**

1. A projection display for modulating light beam into an optical image by an image displaying element and projecting the optical image by a projection lens, comprising:

   a light emitting part for emitting the light beam;
   a reflector for reflecting the light beam from the light emitting part; and
   a rotationally asymmetrical element for directing the light beam reflected in an A quadrant of X-Y plane coordinate system of the reflector into a B quadrant of the X-Y plane coordinate system of the image displaying element, when the X-Y plane coordinate system is provided in a plane perpendicular to an optical axis of the light emitting part.

2. The projection display according to claim 1, wherein the light beam intersects the optical axis of the light emitting part between the reflector and the image displaying element.

3. The projection display according to claim 2, wherein loci on the image displaying element of the light beam emitted from the rotationally asymmetrical element are sparse around a center part of the image displaying element and dense around a periphery part of the image displaying element.

4. The projection display according to claim 3, wherein the light beam emitted from the light emitting part forms a generally circular locus on the reflector and a generally elliptic locus on the image displaying element.

5. The projection display according to claim 1, wherein the A quadrant is a first quadrant and the B quadrant is a third quadrant of the X-Y coordinate system.

6. The projection display according to claim 1, wherein the A quadrant is a second quadrant and the B quadrant is a fourth quadrant of the X-Y coordinate system.

7. The projection display according to claim 1, wherein the A quadrant is a third quadrant and the B quadrant is a first quadrant the X-Y coordinate system.

8. The projection display according to claim 1, wherein the A quadrant is a fourth quadrant and the B quadrant is a second quadrant the X-Y coordinate system.

9. The projection display according to claim 1, wherein the reflector satisfies a formula

$$Z = C \cdot (X^2 + Y^2) \diagup \{1 + \sqrt{[1 - (1+K) C^2 \cdot (X^2 + Y^2)]}\} + \Sigma [A_i \cdot X^m \cdot Y^n]$$

, where C is curvature, K is conic constant, $A_i$ is constant, R is radius of curvature, and m and n are natural numbers, when X-Y-Z coordinate system is provided in which the optical axis of the light emitting part is Z axis.

10. The projection display according to claim 1, wherein the rotationally asymmetrical element satisfies a formula

$$Z = C \cdot (X^2 + Y^2) \diagup \{1 + \sqrt{[1 - (1+K) C^2 \cdot (X^2 + Y^2)]}\} + \Sigma [A_i \cdot X^m \cdot Y^n]$$

, where C is curvature, K is conic constant, $A_i$ is constant, R is radius of curvature, and m and n are natural numbers, when X-Y-Z coordinate system is provided in which the optical axis of the light emitting part is Z axis.

# FIG.1A

# FIG.1B

# FIG.2A

# FIG.2B

# FIG.3

# FIG.4

REFLECTOR PLANE

| # | α | x | y | LIGHT VALVE PLANE |
|---|---|---|---|---|
| 1 | + | + | + | |
| 2 | + | + | − | |
| 3 | + | − | + | |
| 4 | + | − | − | |
| 5 | − | + | + | |
| 6 | − | + | − | |
| 7 | − | − | + | |
| 8 | − | − | − | |

## FIG.5

Y-AXIS

Z-AXIS

X-AXIS

$$Z = C \cdot (X^2 + Y^2) / \{1 + \sqrt{[1 - (1+K) C^2 \cdot (X^2 + Y^2)]}\}$$
$$+ \sum [A_i \cdot X^m \cdot Y^n] \quad \cdots \text{(FORMULA 1)}$$

## FIG.6A

## FIG.6B

## FIG.7A

## FIG.7B

## FIG.8A

## FIG.8B

EP 1 827 015 A2

# FIG.9A

# FIG.9B

25

# FIG.10A

# FIG.10B

# FIG.11A

| | RADIUS OF CURVATURE | SPACING BETWEEN SURFACES | GLASS MATERIAL | | DIAMETER | | |
|---|---|---|---|---|---|---|---|
| LIGHT SOURCE | ∞ | -6.5 | | | | APERTURE DIAMETER | |
| 1 SURFACE | 14.1992 | 33.681 | REFL (REFLECTING SURFACE) | | 30 | 10.8 | |
| 2 SURFACE | ∞ | 1.1 | B270 DESAG | | 40 | | |
| 3 SURFACE | ∞ | 10 | | | 40 | RECTANGULAR (X) | RECTANGULAR (Y) |
| 4 SURFACE | ∞ | 10 | K-VC79 SUMITA OPTICAL GLASS | | | 24 | 16 |
| 5 SURFACE | ∞ | 58.6239 | | | | 20 | 14 |
| 6 SURFACE | 179.763 | 5.5 | BSC7 HOYA | | 40 | | |
| 7 SURFACE | -50.5073 | 40.4419 | | | 40 | | |
| 8 SURFACE | 50.5977 | 5.8 | BSC7 HOYA | | 44 | | |
| 9 SURFACE | 448.655 | 8.44104 | | | 44 | | |
| 10 SURFACE | 31.2704 | 4.5 | BSC7 HOYA | | 44 | | |
| 11 SURFACE | 40.884 | 42.0085 | | | 44 | | |

# FIG.11B

| | 1ST SURFACE | 4TH SURFACE | 5TH SURFACE |
|---|---|---|---|
| K | 9.7894E-01 | | |
| $X^2$ | 8.8904E-05 | 1.5368E-02 | 1.4036E-02 |
| $Y^2$ | -3.7559E-03 | -4.6993E-02 | -2.6188E-02 |
| $X^4$ | 2.2940E-05 | 7.7678E-06 | 4.0728E-05 |
| $Y^2Y^2$ | 8.6986E-05 | 1.0729E-04 | -1.3546E-03 |
| $Y^4$ | 1.2216E-04 | 2.0566E-04 | 8.5935E-05 |
| $Y^6$ | -3.5826E-08 | 4.1364E-06 | 2.4444E-06 |
| $X^4Y^2$ | -1.8948E-07 | 6.6455E-06 | 7.8385E-05 |
| $Y^2Y^4$ | -5.0986E-07 | 2.8493E-05 | 8.1727E-05 |
| $Y^6$ | -9.8313E-07 | 4.7577E-06 | 3.6635E-06 |
| $X^8$ | 1.1431E-10 | -3.9652E-08 | -7.5825E-08 |
| $X^6Y^2$ | 6.5196E-10 | 1.9048E-07 | -8.7145E-07 |
| $X^4Y^4$ | 6.0678E-10 | 3.8506E-07 | -8.5427E-07 |
| $X^2Y^6$ | 5.8302E-09 | -2.2856E-07 | -7.5922E-07 |
| $Y^8$ | 5.5302E-09 | 1.4449E-07 | 6.3933E-08 |
| $X^{10}$ | 1.1890E-14 | 6.0293E-11 | 3.2047E-10 |
| $X^8Y^2$ | -2.2711E-13 | -1.7158E-09 | 2.4643E-09 |
| $X^6Y^4$ | -1.9414E-12 | -8.6520E-09 | -5.1821E-10 |
| $X^4Y^6$ | 3.7591E-13 | -7.7530E-09 | 6.5233E-09 |
| $X^2Y^8$ | -1.5712E-11 | -1.2116E-09 | 6.8054E-09 |
| $Y^{10}$ | -1.1212E-11 | -2.1434E-09 | 3.2729E-10 |

FIG.12A

FIG.12B

FIG.12C

## FIG.13A

4.629mm

4.629mm

## FIG.13B

| x=0 y= 0.0 A=0 | ▬▬▬ |
| x=0 y= 5.0 A=0 | |
| x=0 y=-5.0 A=0 | |

Distance along profile in MM

## FIG.13C

| x= 0.0 y=0 A=90 | ▬▬▬ |
| x= 8.9 y=0 A=90 | |
| x=-8.9 y=0 A=90 | |

Distance along profile in MM

# FIG.14A

# FIG.14B

FIG.15A

points on panel    . . . . . .
panel

y (mm)

10

5

0

-5

-10

x (mm)

-14        -7        0        7        14

FIG.15B

points on panel    . . . . . .
panel

y (mm)

10

5

0

-5

-10

x (mm)

-14        -7        0        7        14

FIG.15C

points on panel    . . . . . .
panel

y (mm)

10

5

0

-5

-10

x (mm)

-14        -7        0        7        14

# FIG.16A

PARABOLOID SURFACE REFLECTOR

DISTANCE FROM THE REFLECTOR
L1 SOLID LINE 6.5 mm
L2 BROKEN LINE 7.0 mm

L2

6

2

L1

$5.59-13.00 = -7.41mm$

# FIG.16B

DISTANCE FROM THE REFLECTOR
L1 SOLID LINE 6.5 mm
L2 BROKEN LINE 7.0 mm

7

L2

$-10.54-(-11.39) = -0.85mm$

2

4

L1

5a  5b  5c

6

5

# FIG.17A

# FIG.17B

# FIG.18A

| | RADIUS OF CURVATURE | SPACING BETWEEN SURFACES | GLASS MATERIAL | | DIAMETER | | |
|---|---|---|---|---|---|---|---|
| LIGHT SOURCE | ∞ | −6.5 | | | | APERTURE DIAMETER | |
| 1 SURFACE | 14.2064 | 35.9165 | REFL (REFLECTING SURFACE) | | 30 | 10.8 | |
| 2 SURFACE | ∞ | 1.1 | B270 | DESAG | 40 | | |
| 3 SURFACE | ∞ | 10 | | | 40 | RECTANGULAR (X) | RECTANGULAR (Y) |
| 4 SURFACE | ∞ | 10 | K-VC79 | SUMITA OPTICAL GLASS | | 24 | 16 |
| 5 SURFACE | ∞ | 63.019 | | | | 20 | 14 |
| 6 SURFACE | 199.986 | 5.5 | BSC7 | HOYA | 40 | | |
| 7 SURFACE | −52.9677 | 40.4419 | | | 40 | | |
| 8 SURFACE | 48.3762 | 5.8 | BSC7 | HOYA | 44 | | |
| 9 SURFACE | 303.212 | 9.56304 | | | 44 | | |
| 10 SURFACE | 30.8731 | 4.5 | BSC7 | HOYA | 44 | | |
| 11 SURFACE | 37.0935 | 44.6539 | | | 44 | | |

# FIG.18B

| | 1ST SURFACE | 4TH SURFACE | 5TH SURFACE |
|---|---|---|---|
| $K$ | 1.0331E+00 | | |
| $X^2$ | −3.0673E−04 | 1.4930E−02 | 1.5785E−02 |
| $Y^2$ | −3.6073E−03 | −4.6392E−02 | −2.5584E−02 |
| $X^4$ | 2.5448E−05 | 1.1781E−05 | 4.5651E−05 |
| $X^2Y^2$ | 9.6954E−05 | 6.3938E−05 | −1.1012E−03 |
| $Y^4$ | 1.2015E−04 | 2.1367E−04 | 1.0102E−04 |
| $Y^6$ | −3.7155E−08 | 3.6463E−06 | 2.3912E−06 |
| $X^4Y^2$ | −1.8948E−07 | 5.7449E−06 | 5.9468E−05 |
| $X^2Y^4$ | −3.2956E−07 | 3.0388E−05 | 8.0427E−05 |
| $Y^6$ | −9.4534E−07 | 4.7738E−06 | 3.9834E−06 |
| $X^8$ | 1.1045E−10 | −3.9762E−08 | −9.7689E−08 |
| $X^6Y^2$ | 6.5196E−10 | 1.7356E−07 | −7.2203E−07 |
| $X^4Y^4$ | 6.0678E−10 | 3.6169E−07 | −1.4024E−06 |
| $X^2Y^6$ | 2.2153E−09 | −2.0080E−07 | −7.8503E−07 |
| $Y^8$ | 5.2979E−09 | 1.4344E−07 | 6.4880E−08 |
| $X^{10}$ | 1.1890E−14 | 6.8348E−11 | 6.0558E−10 |
| $X^8Y^2$ | −2.2711E−13 | −1.2613E−09 | 4.0372E−09 |
| $X^6Y^4$ | −1.9414E−12 | −8.2077E−09 | 2.1805E−08 |
| $X^4Y^6$ | 3.7591E−13 | −8.8192E−09 | 1.3411E−08 |
| $X^2Y^8$ | −3.3671E−13 | −2.2264E−09 | 5.2034E−09 |
| $Y^{10}$ | −1.0816E−11 | −2.1679E−09 | 2.7129E−10 |

FIG.19A

FIG.19B

FIG.19C

## FIG.20A

4.629mm

4.629mm

## FIG.20B

| x=0 y= 0 A=0 | ▬▬▬ |
| x=0 y= 5 A=0 | ─── |
| x=0 y=-5 A=0 | ─── |

Distance along profile in MM

## FIG.20C

| x= 0.0 y=0 A=90 | ▬▬▬ |
| x= 8.9 y=0 A=90 | ─── |
| x=-8.9 y=0 A=90 | ─── |

Distance along profile in MM

# FIG.21A

# FIG.21B

# FIG.22A

| | RADIUS OF CURVATURE | SPACING BETWEEN SURFACES | GLASS MATERIAL | | DIAMETER | | |
|---|---|---|---|---|---|---|---|
| LIGHT SOURCE | ∞ | −6.5 | | | | APERTURE DIAMETER | |
| 1 SURFACE | 14.2052 | 38.7091 | REFL (REFLECTING SURFACE) | | 30 | 10.8 | |
| 2 SURFACE | ∞ | 1.1 | B270 | DESAG | 40 | | |
| 3 SURFACE | ∞ | 10 | | | 40 | RECTANGULAR (X) | RECTANGULAR (Y) |
| 4 SURFACE | ∞ | 10 | PMMA | | | 24 | 16 |
| 5 SURFACE | ∞ | 63.7385 | | | | 20 | 14 |
| 6 SURFACE | 199.29 | 5.5 | BSC7 | HOYA | 40 | | |
| 7 SURFACE | −52.9357 | 40.4419 | | | 40 | | |
| 8 SURFACE | 48.3903 | 5.8 | BSC7 | HOYA | 44 | | |
| 9 SURFACE | 294.102 | 9.58989 | | | 44 | | |
| 10 SURFACE | 31.0003 | 4.5 | BSC7 | HOYA | 44 | | |
| 11 SURFACE | 36.6798 | 44.7103 | | | 44 | | |

# FIG.22B

| | 1ST SURFACE | 4TH SURFACE | 5TH SURFACE |
|---|---|---|---|
| $K$ | 1.0564E+00 | | |
| $X^2$ | −1.7390E−04 | 1.5808E−02 | 1.7082E−02 |
| $Y^2$ | −3.6409E−03 | −4.6876E−02 | −2.4554E−02 |
| $X^4$ | 2.5158E−05 | 3.9125E−05 | 5.4666E−05 |
| $Y^2Y^2$ | 9.2998E−05 | 8.1461E−05 | −1.1557E−03 |
| $Y^4$ | 1.1849E−04 | 2.1075E−04 | 1.2521E−04 |
| $Y^6$ | −3.7573E−08 | 3.8199E−06 | 2.6430E−06 |
| $X^4Y^2$ | −1.8948E−07 | 6.1988E−06 | 5.8468E−05 |
| $Y^2Y^4$ | −3.0508E−07 | 3.0757E−05 | 8.0039E−05 |
| $Y^6$ | −9.3668E−07 | 4.7914E−06 | 4.3222E−06 |
| $X^8$ | 1.0679E−10 | −3.9941E−08 | −9.5366E−08 |
| $X^6Y^2$ | 6.5196E−10 | 1.8767E−07 | −6.0499E−07 |
| $X^4Y^4$ | 6.0678E−10 | 3.6438E−07 | −1.3184E−06 |
| $X^2Y^6$ | 1.9450E−09 | −1.9176E−07 | −7.7925E−07 |
| $Y^8$ | 5.2229E−09 | 1.4483E−07 | 6.8837E−08 |
| $X^{10}$ | 1.1890E−14 | 6.1991E−11 | 5.2091E−10 |
| $X^8Y^2$ | −2.2711E−13 | −1.3334E−09 | 3.5124E−09 |
| $X^6Y^4$ | −1.9414E−12 | −7.8080E−09 | 2.7412E−08 |
| $X^4Y^6$ | 3.7591E−13 | −8.0218E−09 | 2.1571E−08 |
| $X^2Y^8$ | −1.0502E−12 | −2.1780E−09 | 6.7740E−09 |
| $Y^{10}$ | −1.0731E−11 | −2.1223E−09 | 2.8871E−10 |

FIG.23A

FIG.23B

FIG.23C

## FIG.24B

| x=0 | y= 0 | A=0 | ▬▬ |
| x=0 | y= 5 | A=0 | ── |
| x=0 | y=-5 | A=0 | ── |

Distance along profile in MM

## FIG.24A

4.629mm

4.629mm

## FIG.24C

| x= 0.0 | y=0 | A=90 | ▬▬ |
| x= 8.9 | y=0 | A=90 | ── |
| x=-8.9 | y=0 | A=90 | ── |

Distance along profile in MM

## FIG.25A

## FIG.25B

# FIG.26

# FIG.27

# FIG.28

# FIG.29

# FIG.30

# FIG.31

# FIG.32

# FIG.33

## FIG.34A

X-Z CROSS SECTION

Y-Z CROSS SECTION

1 0 0

## FIG.34B

Y-Z CROSS SECTION

X-Z CROSS SECTION

1 0 0

## FIG.35A

## FIG.35B

## FIG.35C

## FIG.36A

## FIG.36B

## FIG.36C

# FIG.37A

| | RADIUS OF CURVATURE | SPACING BETWEEN SURFACES | GLASS MATERIAL | | DIAMETER | RECTANGULAR (X) | RECTANGULAR (Y) |
|---|---|---|---|---|---|---|---|
| LIGHT SOURCE | ∞ | -6.5 | | | | | |
| 1 SURFACE | 14.1992 | 33.681 | REFL | (REFLECTING SURFACE) | 30 | | |
| 2 SURFACE | ∞ | 1.1 | B270 | DESAG | 40 | | |
| 3 SURFACE | ∞ | 10 | | | 40 | | |
| 4 SURFACE | ∞ | 10 | K-VC79 | SUMITA OPTICAL GLASS | | 24 | 16 |
| 5 SURFACE | ∞ | 58.6239 | | | | 20 | 14 |
| 6 SURFACE | 179.763 | 5.5 | BSC7 | HOYA | 40 | | |
| 7 SURFACE | -50.5073 | 40.4419 | | | 40 | | |
| 8 SURFACE | 50.5977 | 5.8 | BSC7 | HOYA | 44 | | |
| 9 SURFACE | 448.655 | 8.44104 | | | 44 | | |
| 10 SURFACE | 31.2704 | 4.5 | BSC7 | HOYA | 44 | | |
| 11 SURFACE | 40.884 | 42.0085 | | | 44 | | |

# FIG.37B

| | 1ST SURFACE | 4TH SURFACE | 5TH SURFACE |
|---|---|---|---|
| $K$ | 9.79E-01 | | |
| $X^2$ | 8.89E-05 | 1.54E-02 | 1.40E-02 |
| $Y^2$ | -3.76E-03 | -4.70E-02 | -2.62E-02 |
| $X^4$ | 2.29E-05 | 7.77E-06 | 4.07E-05 |
| $Y^2Y^2$ | 8.70E-05 | 1.07E-04 | -1.35E-03 |
| $Y^4$ | 1.22E-04 | 2.06E-04 | 8.59E-05 |
| $Y^6$ | -3.58E-08 | 4.14E-06 | 2.44E-06 |
| $X^4Y^2$ | -1.89E-07 | 6.65E-06 | 7.84E-05 |
| $Y^2Y^4$ | -5.10E-07 | 2.85E-05 | 8.17E-05 |
| $Y^6$ | -9.83E-07 | 4.76E-06 | 3.66E-06 |
| $X^8$ | 1.14E-10 | -3.97E-08 | -7.58E-08 |
| $X^6Y^2$ | 6.52E-10 | 1.90E-07 | -8.71E-07 |
| $X^4Y^4$ | 6.07E-10 | 3.85E-07 | -8.54E-07 |
| $X^2Y^6$ | 5.83E-09 | -2.29E-07 | -7.59E-07 |
| $Y^8$ | 5.53E-09 | 1.44E-07 | 6.39E-08 |
| $X^{10}$ | 1.19E-14 | 6.03E-11 | 3.20E-10 |
| $X^8Y^2$ | -2.27E-13 | -1.72E-09 | 2.46E-09 |
| $X^6Y^4$ | -1.94E-12 | -8.65E-09 | -5.18E-10 |
| $X^4Y^8$ | 3.76E-13 | -7.75E-09 | 6.52E-09 |
| $X^2Y^8$ | -1.57E-11 | -1.21E-09 | 6.81E-09 |
| $Y^{10}$ | -1.12E-11 | -2.14E-09 | 3.27E-10 |

**REFERENCES CITED IN THE DESCRIPTION**

**Patent documents cited in the description**

- JP 9005881 A
- JP 2004226814 A
- JP 8234156 A